# EUROPEAN PATENT SPECIFICATION

(11) **EP 4 412 190 B1**
(45) Date of publication and mention of the grant of the patent: **18.03.2026**
(21) Application number: 23802760.1
(22) Date of filing: 05.05.2023
(51) Int. Cl.: H04M 3/56, G06F 3/048, G06F 3/0488, H04M 3/428, H04W 4/16

(54) **CALL METHOD AND COMMUNICATION SYSTEM**
ANRUFVERFAHREN UND KOMMUNIKATIONSSYSTEM
PROCÉDÉ D'APPEL ET SYSTÈME DE COMMUNICATION

(30) Priority: 13.05.2022 CN 202210524577
(43) Date of publication of application: 07.08.2024
(73) Proprietor: Honor Device Co., Ltd., Shenzhen, Guangdong 518040 (CN)
(72) Inventor: WU, Menghan, Shenzhen, Guangdong 518040 (CN)
(74) Representative: Gill Jennings & Every LLP
(86) International application number: PCT/CN2023/092272
(87) International publication number: WO 2023/216988

(56) References cited:
- CN-A- 102 348 179
- CN-A- 113 572 731
- CN-A- 114 189 846
- CN-A- 114 268 691
- JP-A- 2012 070 044
- US-A1- 2005 069 101
- US-A1- 2012 281 823
- US-A1- 2016 014 579

## Description

This application claims priority to Chinese Patent Application No. 202210524577.7, filed with the China National Intellectual Property Administration on May 13, 2022 and entitled "COMMUNICATION METHOD AND COMMUNICATION SYSTEM".

### TECHNICAL FIELD

The application relates to the field of terminal technologies, and in particular, to a communication method and a communication system.

### BACKGROUND

At present, to meet the needs of users for multi-party calls, operators support two-party or multi-party (three-party and above) calls. For example, when a user A talks with a user B through a mobile phone, the user A can also answer an incoming call from a user C or make a call to the user C through the mobile phone, to implement a three-party call among the user A, the user B and the user C.

However, the user A cannot make a call with the user B through an earpiece of the mobile phone and answer an incoming call or dial by using the mobile phone at the same time. That is, when the user answers the incoming call or dials by using the mobile phone, the current call of the user is affected. In addition, when the user receives two incoming calls at the same time, the user can only answer one incoming call, but cannot answer the other incoming call.

It can be learned that there are many inconveniences for users to implement multi-party calls by using a single device. Other previously proposed arrangements are disclosed in US 2005/069101 A1 and US 2016/014579 A1.

### SUMMARY

Embodiments of the application provides a call method and a communication system that are configured to reduce influence of an operation of a user on a current call when the user performs a multi-party call simultaneously by using a single device.

To achieve the foregoing objective, the following technical solutions are used in embodiments of this application:

According to a first aspect, this application provides a communication method, which is applied to a communication system including a first device and a second device. The first device is making a first call with a third device. The method includes: The second device displays a first interface, where the first interface includes an icon of a first application. The second device displays a second interface in response to an operation of the user on the icon of the first application. The second device sends a dialing instruction to the first device in response to an operation of the user of inputting a target number and dialing on the second interface, where the dialing instruction carries a target number. The first device sends a call request to a fourth device in response to the dialing instruction, where the fourth device is a device corresponding to the target number. The fourth device displays a third interface in response to the call request, where the third interface includes a first control. The fourth device establishes a second call with the second device through the first device in response to an operation of the user on the first control. The method is characterized in that it further comprises the second device determining whether the first device and the second device are logged in to a same system authentication account. If the first device and second device are logged in to the same system authentication account, then a trust relationship exists between the first device and the second device, and both the first device and the second device belong to a same communication system.

According to the method provided in embodiments of this application, when making a call (for example, the first call) with the third device by using the first device (for example, a mobile phone), the user may perform a dialing operation by using the second device (for example, a tablet computer), and establish the second call with the fourth device by using components such as an antenna, and a communication module of the mobile phone. This avoids that the user performs a dialing operation when making a call by using the mobile phone, and can reduce influence of the dialing operation on the current call (for example, the first call), and improve user experience.

Other aspects of the present invention are defined in the appended set of claims.

### BRIEF DESCRIPTION OF DRAWINGS

FIG. 1 is a scene diagram of using a mobile phone;
FIG. 2A is a schematic diagram of a structure of a communication system according to an embodiment of this application;
FIG. 2B is a flowchart of authentication according to an embodiment of this application;
FIG. 2C is a schematic diagram of a structure an electronic device 100 according to an embodiment of this application;
FIG. 2D is a schematic diagram of a structure of an electronic device 200 according to an embodiment of this application;
FIG. 3A is a block diagram of a software structure of the electronic device 100 according to an embodiment of this application;
FIG. 3B is a block diagram of a software structure of the electronic device 200 according to an embodiment of this application;
FIG. 4A is an interaction diagram of software modules according to an embodiment of this application;
FIG. 4B is an interaction diagram of another software module according to an embodiment of this application;
FIG. 5A and FIG. 5B are a flowchart of a communication method according to an embodiment of this application;
FIG. 6A is a diagram of interfaces according to an embodiment of this application;
FIG. 6B is a diagram of interfaces according to an embodiment of this application;
FIG. 6C is a diagram of interfaces according to an embodiment of this application;
FIG. 6D is a diagram of interfaces according to an embodiment of this application;
FIG. 6E is a diagram of interfaces according to an embodiment of this application;
FIG. 6F is a diagram of interfaces according to an embodiment of this application;
FIG. 6G is a diagram of interfaces according to an embodiment of this application;
FIG. 6H is a diagram of interfaces according to an embodiment of this application;
FIG. 7 is a flowchart of another communication method according to an embodiment of this application;
FIG. 8A is a diagram of interfaces according to an embodiment of this application;
FIG. 8B is a diagram of interfaces according to an embodiment of this application;
FIG. 8C is a diagram of interfaces according to an embodiment of this application;
FIG. 8D is a diagram of interfaces according to an embodiment of this application;
FIG. 8E is a diagram of interfaces according to an embodiment of this application;
FIG. 9 is a flowchart of a communication method according to an embodiment of this application; and
FIG. 10 is a schematic diagram of a structure of a chip according to an embodiment of this application.

### DESCRIPTION OF EMBODIMENTS

The following terms "first" and "second" are merely intended for a purpose of description, and shall not be understood as an indication or implication of relative importance or implicit indication of a quantity of indicated technical features. Therefore, a feature defined by "first", "second", or "third" may explicitly or implicitly include one or more features. In descriptions of embodiments, unless otherwise stated, "a plurality of" means two or more.

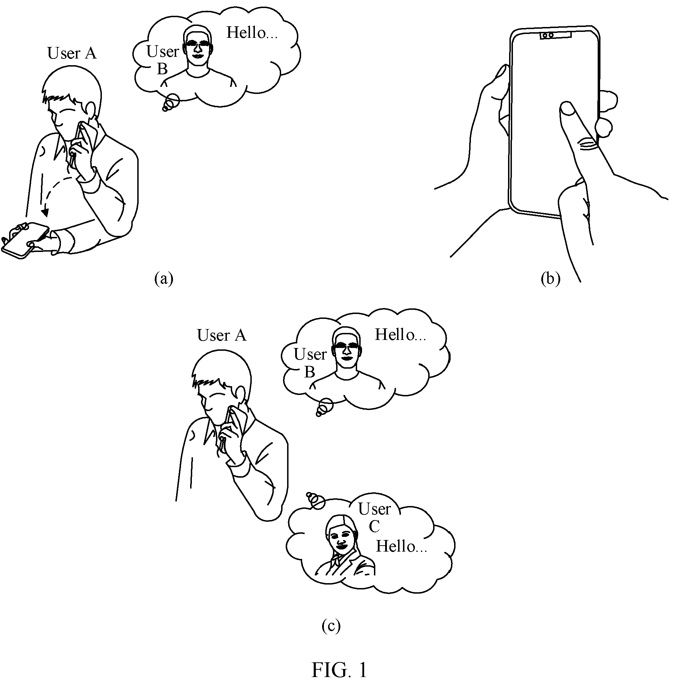

At present, a user can make calls with a plurality of users at the same time by using electronic devices. For example, an electronic device is a mobile phone. As shown in (a) in FIG. 1, a user A can make a call with a user B by using the mobile phone. When the user A needs to conduct a conference call with the user B and a user C at this time, as shown in (b) in FIG. 1, the mobile phone can receive an operation of the user A dialing a phone number of the user C or an operation of the user A answering an incoming call of the user C. After the mobile phone connects the call with the user C, as shown in (c) in FIG. 1, the user A can makes a three-party conference with the user B and the user C.

In the foregoing application scenario, when the user A dials the phone number of the user C or answers the incoming call of the user C, as shown in (a) and (b) of FIG. 1, the user A needs to hold the mobile phone to dial or answer the phone, and at this time, the user A cannot listen to voice of the user B by using an earpiece of the mobile phone. It can be seen learned that when a user performs an operation of answering an incoming call or a dialing operation, a current call of the user is affected.

Embodiments of this application adopt a communication system to implement multi-party communication. When a device 1 receives incoming call information or outgoing call information, the device 1 synchronizes the incoming call information or the outgoing call information to a device 2 in the communication system, so that a user can answer a call or dial by using the device 2 (for example, a tablet computer) when making a call by using the device 1 (for example, a mobile phone). The multi-party communication is implemented by using a plurality of devices, and reduces influence on a current call.

The foregoing calls include, but are not limited to, 2G/3G/4G/5G and other types of calls based on mobile communication functions of electronic devices, calls based on applications on electronic devices (for example, FaceTime^{™}, MeeTime^{™}, and WeChat^{™}), and the like. In addition, the calls may include a voice call, a video call, and the like.

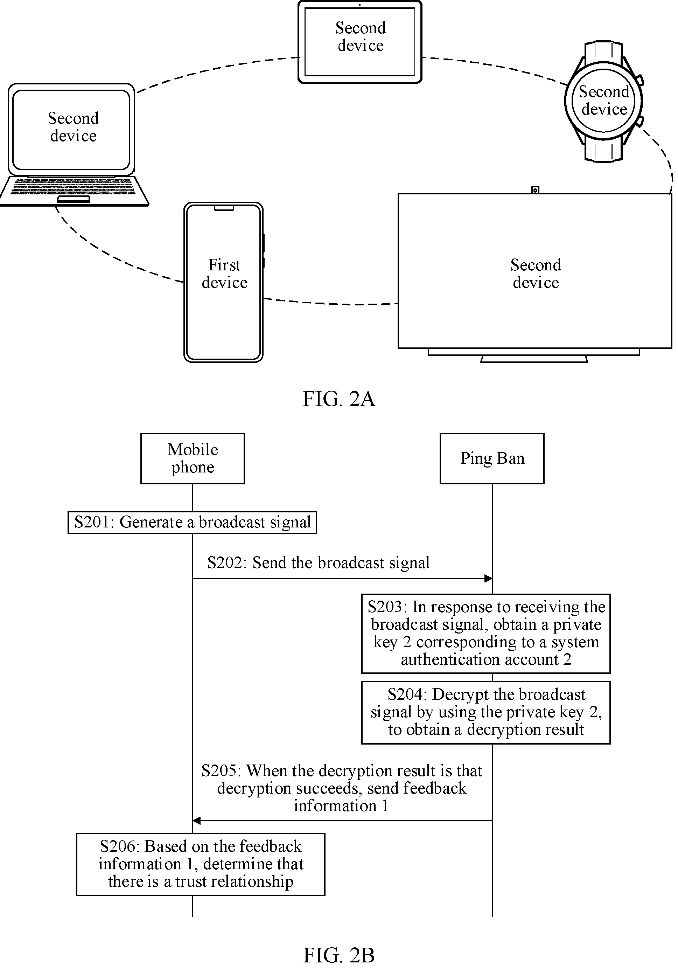

FIG. 2A is a schematic diagram of the architecture of a communication system according to an embodiment of this application. The system may include a first device and a second device. The first device and the second device can communicate with each other through wireless fidelity (Wi-Fi), Bluetooth, near field communication (near field communication, NFC) and other communication manners. The first device and the second device each are installed with a phone application. The phone application may be a system-level phone application or a third-party application (for example, FaceTime^{™}, MeeTime^{™}, WeChat^{™}) that can implement a call, and no specific restrictions are made here.

The first device in embodiments of the application is an electronic device with a mobile communication function, and may be a mobile phone, a tablet computer, a personal digital assistant (PDA), an augmented reality (AR)\virtual reality (VR) device, a smart watch, or another electronic device. A specific form of the first device is not specially limited in embodiments of this application.

The second device in embodiments of this application may be a mobile phone, a tablet computer, a desktop computer (desktop computer), a handheld computer, a notebook computer (laptop computer), an ultra-mobile personal computer (ultra-mobile personal computer, UMPC), a netbook, a PDA, an AR\VR device, a smart watch, a smart TV, or another electronic device. A specific form of the second device is not specially limited in the embodiments of this application.

Both the first device and the second device support a collaborative calling function (which can also be referred to as an ultra incoming call function). The collaborative calling function means that, when the first device receives an incoming call, the first device can send incoming call information to the second device, so that a device 3 can also receive the incoming call information, to remind the user to answer the incoming call on the second device; and the second device can receive a dialing operation of the user, and send obtained dialing information to the first device in the communication system, so that the first device can dial based on the dialing information. That is, both the first device and the second device in the communication system can answer a call and dials.

It should be noted that, In FIG. 2A, only that a mobile phone is a first device, and a notebook computer, a tablet computer, a smart watch, and a smart TV are second devices is used as an example. Actually, the first device may alternatively be a tablet computer, and a mobile phone, a notebook computer, a smart watch, and a smart TV are second devices. Alternatively, the communication system may include more or less electronic devices. This is not specifically limited herein.

The first device and the second device further have a trust relationship.

When a system authentication account logged in by the first device and the second device is a same system authentication account, it is considered that there is a trust relationship between the first device and the second device. For another example, it may also be considered that there is a trust relationship between the first device and the second device when a mutual recognition operation (for example, an authorization operation) has been performed between the first device and the second device.

For example, when the first device is a mobile phone, the second device is a tablet computer, a communication connection is established between the mobile phone and the tablet computer, and both the mobile phone and the tablet computer log in to a same system authentication account (for example, an Honor account), it can be considered that there is a trust relationship between the mobile phone and the tablet computer, and both the mobile phone and the tablet computer belong to a same communication system. A procedure of determining whether the mobile phone logs in to the same system authentication account as the tablet computer can be shown in FIG. 2B. This procedure includes:

S201: The mobile phone generates a broadcast signal.

The broadcast signal includes an encrypted system authentication account 1. The system authentication account 1 is a system authentication account currently logged in by the mobile phone. The system authentication account can be a register account provided by a cloud server (for example, an Honor account, an Apple^{™} account), each system authentication account (can correspond to a public key (Public Key) and a private key (Private Key). The public key and the private key are a key pair (namely, one public key and one private key, which is an asymmetric encryption manner) obtained by using an encryption algorithm. The public key can encrypt a session and verify a digital signature, and session data can be decrypted only by using the corresponding private key. Therefore, security of data transmission is ensured.

Optionally, the public key and private key of the system authentication account can be stored in the cloud server. For example, the cloud server stores a public key 1 corresponding to the system authentication account 1. In addition, the cloud server can interact with an electronic device to query a public key of a system authentication account logged in by the electronic device.

When the mobile phone logs in to the system authentication account 1, the mobile phone can send a query request to the cloud server, where the query request carries the system authentication account 1. In response to the query request, the cloud server queries a public key corresponding to the system authentication account 1 as the public key 1, and feeds back a query result to the mobile phone, where the query result carries the public key 1. After obtaining the public key 1, the mobile phone encrypts the system authentication account 1 by using the public key 1, to obtain the broadcast signal.

Therefore, when the mobile phone logs in to the system authentication account 1, the mobile phone can send a request for obtaining a public key to the cloud server, to obtain the corresponding public key 1.

S202: The mobile phone sends the broadcast signal.

The mobile phone can send the broadcast signal by using short-range communication technologies such as, NFC, Bluetooth, and Wi-Fi, so that electronic devices (such as tablet computers) near the mobile phone can receive the broadcast signal.

In an optional implementation, the mobile phone can send broadcast signals to the outside in real time. In another optional implementation, the mobile phone can send broadcast signals to the outside in a specific scenario. For example, the mobile phone can send a broadcast signal when the mobile phone changes from a stationary state to a moving state. For another example, the mobile phone can send a broadcast signal when the mobile phone recognizes that a location of the mobile phone changes. For another example, the mobile phone sends a broadcast signal when the mobile phone detects that there is a new device accessing the communication network (for example, when the mobile phone detects, by using a near-field communication technology, that there is a new device around the mobile phone).

S203: In response to receiving the broadcast signal, a tablet computer obtains a private key 2 corresponding to a system authentication account 2.

The system authentication account 2 is a system authentication account currently logged in by the tablet computer. As explained earlier, the cloud server stores a public key and a private key of each system authentication account. After receiving the broadcast signal, the tablet computer can send a request to the cloud server, to obtain the private key 2 corresponding to the system authentication account 2.

S204: The tablet computer decrypts the broadcast signal by using the private key 2, to obtain a decryption result.

It may be understood that, when the tablet computer can successfully decrypt the broadcast signal, it indicates that the private key 2 and the public key 1 are a key pair. Because a system authentication account number and a key pair (namely, a public key and a private key) are in a one-to-one corresponding relationship, it can be confirmed that the system authentication account number 2 logged in by the tablet computer and the system authentication account number 1 logged in by the mobile phone are a same account number, and the tablet computer obtains a decryption result that decryption succeeds. On the contrary, when the tablet computer cannot decrypt the broadcast signal, it indicates that the private key 2 does not match the public key 1, the system authentication account 2 logged in by the tablet computer and the system authentication account 1 logged in by the mobile phone are not a same account, and the tablet computer obtains a decryption result that decryption fails.

In addition, when the tablet computer obtains the decryption result that decryption succeeds, the tablet computer can confirm that there is a trust relationship with the mobile phone. Optionally, the tablet computer can identify the mobile phone as a trusted device. After the mobile phone is identified as a trusted device, the tablet computer can directly perform data interaction with the mobile phone without authentication again. This improves efficiency of data interaction.

S205: When the decryption result is that decryption succeeds, the tablet computer sends feedback information 1 to the mobile phone.

The feedback information 1 may include an identification that decryption succeeds, the system authentication account 2, and the like. It should be noted that, when the decryption result is that decryption fails, the tablet computer may send the feedback information 2 to the mobile phone, where the feedback information 2 carries an identification that decryption fails.

Optionally, before the tablet computer sends the feedback information 1 to the mobile phone, the tablet computer can encrypt, by using a public key 2 corresponding to the system authentication account 2, the system authentication account 2 and the identification that decryption succeeds, to ensure information security.

S206: Based on the feedback information 1, the mobile phone determines that there is a trust relationship with a PC.

Optionally, the mobile phone can query a private key 1 corresponding to the system authentication account 1, and decrypt the feedback information 1 by using the private key 1, to confirm the trust relationship with the PC. Optionally, the mobile phone can also identify the tablet computer as a trusted device. After identifying the tablet computer as the trusted device, the mobile phone can directly perform data interaction with the tablet computer without authenticating again. This improves the efficiency of data interaction.

It should be noted that, in this embodiment, only that the tablet computer receives the broadcast signal is used as an example, and the mobile phone can further verify whether there is a trust relationship with another second device in the communication system by using the foregoing process S201 to S206. This is repeated herein.

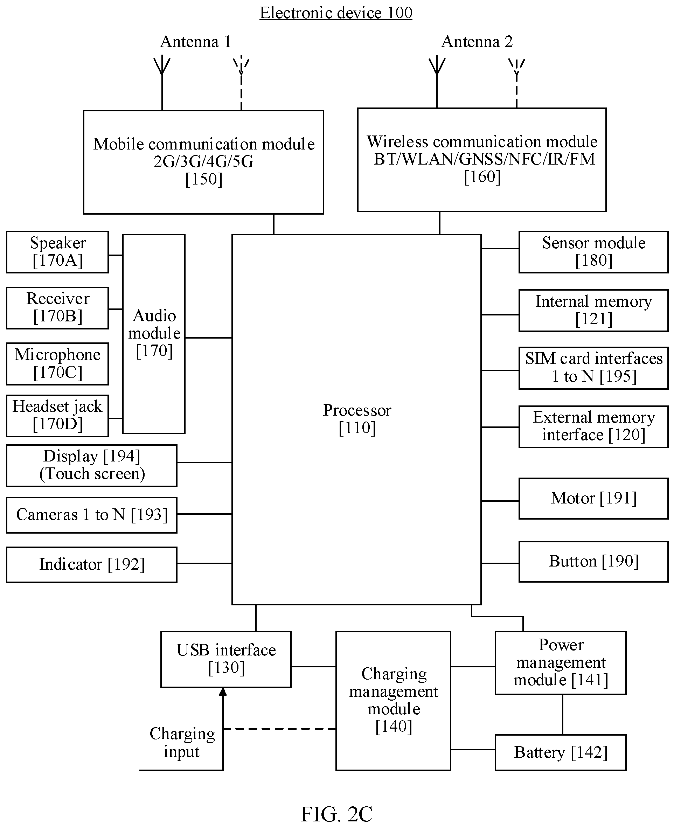

In embodiments of this application, that the first device shown in FIG. 2A is an electronic device 100 (for example, the mobile phone) is used as an example, and a structure of the first device provided in embodiments of this application is illustrated by using an example. As shown in FIG. 2C, the electronic device 100 (for example, the mobile phone) may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

The sensor module 180 may include sensors a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the schematic structure in this embodiment constitutes no specific limitation on the electronic device 100. In some other embodiments, the electronic device 100 may include more or fewer components than those shown in the figure, or some components may be combined, or some components may be split, or a different component arrangement may be used. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate components, or may be integrated into one or more processors.

The controller may be a nerve center and a command center of the electronic device 100. The controller may generate an operation control signal based on an instruction operation code and a timing signal, to implement control on instruction fetching and execution.

A memory may be further disposed in the processor 110, and is configured to store instructions and data. In some embodiments, the memory in the processor 110 is a cache. The memory may store instructions or data recently used or cyclically used by the processor 110. When the processor 110 needs to use the instructions or the data again, the processor 110 may directly call the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a USB interface.

It may be understood that an interface connection relationship between the modules shown in this embodiment is merely an example for description, and constitutes no limitation on the structure of the electronic device 100. In some other embodiments, the electronic device 100 may alternatively use an interface connection manner different from that in the foregoing embodiment, or use a combination of a plurality of interface connection manners.

The charge management module 140 is configured to receive a charging input from the charger. The charger may be a wireless charger or a wired charger. When the charging management module 140 charges the battery 142, a power management module 141 may be used to supply power to the electronic device.

The power management module 141 is configured to be connected to the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. In some embodiments, the power management module 141 and the charging management module 140 may further be configured in the same component.

A wireless communication function of the electronic device 100 may be implemented by using the antenna 1, the antenna 2, the mobile communication module 150, the wireless communication module 160, the modem processor, the baseband processor, and the like. In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The antenna 1 and the antenna 2 are configured to transmit and receive electromagnetic wave signals. Each antenna in the electronic device 100 may be configured to cover one or more communication frequency bands. Different antennas may further be reused to improve utilization of the antennas. For example, the antenna 1 may be reused as a diversity antenna of a wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation.

The mobile communication module 150 may further amplify a signal modulated by the modem processor, and convert the signal into an electromagnetic wave by using the antenna 1 for radiation. In some embodiments, at least some functional modules of the mobile communication module 150 may be disposed in the processor 110. In some embodiments, at least some of the functional modules of the mobile communication module 150 may be disposed in a same component as at least some of modules of the processor 110.

The wireless communication module 160 may provide a solution for wireless communication solution that includes a WLAN (for example, a wireless fidelity (wireless fidelity, Wi-Fi) network), Bluetooth (Bluetooth, BT), and a global navigation satellite system (global navigation satellite system, GNSS), frequency modulation (frequency modulation, FM), a near field communication (near field communication, NFC) technology, an infrared (infrared, IR) technology, and the like and that is applied to the electronic device 100.

The wireless communication module 160 may be one or more components into which at least one communication processing module is integrated. The wireless communication module 160 receives an electromagnetic wave by using the antenna 2, performs frequency modulation on and filters the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave by using the antenna 2 for radiation.

The electronic device 100 implements a display function by using the GPU, the display 194, the application processor, and the like. The GPU is a microprocessor for image processing and connects the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel.

The electronic device 100 may implement a photographing function by using the ISP, the camera 193, the video codec, the GPU, the display 194, the application processor, and the like. The ISP is configured to process data fed back by the camera 193. The camera 193 is configured to capture a still image or a video. In some embodiments, the electronic device 100 may include 1 or N cameras 193, and N is a positive integer greater than 1.

The external memory interface 120 may be configured to be connected to an external storage card, for example, a micro SD card, to expand a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. For example, in this embodiment of this application, the processor 110 may execute the instructions stored in the internal memory 121. The internal memory 121 may include a program storage area and a data storage area.

The program storage area may store an operating system, an application required for at least one function (like a sound playing function and an image display function), and the like. The data storage area may store data (like audio data and a phone book) created based on use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function like music play and recording through the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The motor 191 may generate a vibration prompt. The motor 191 may be configured to provide an incoming call vibration prompt and touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like.

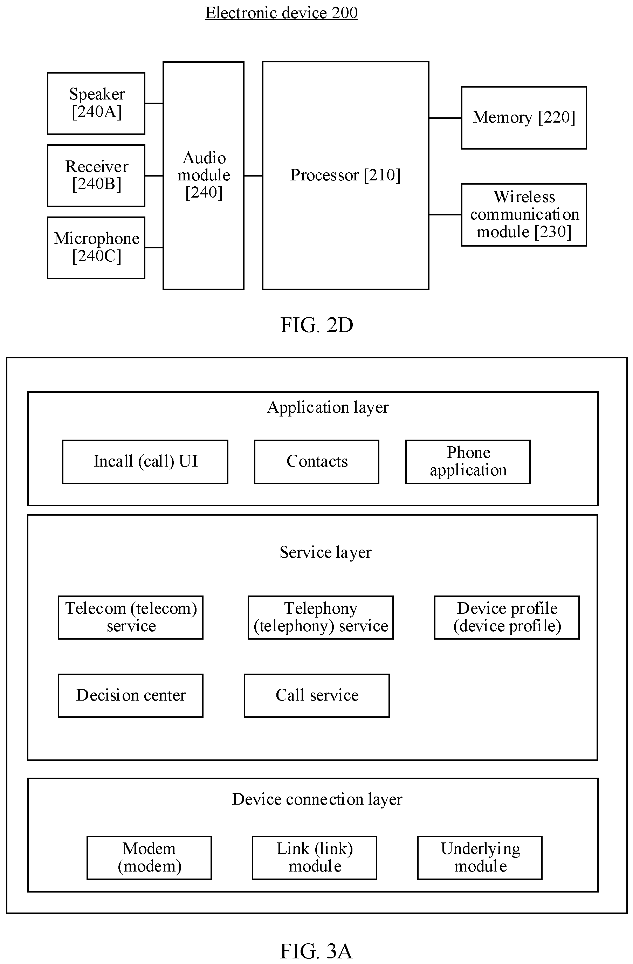

In the embodiment of this application, that the second device shown in FIG. 2A is an electronic device 200 (like a tablet computer) is used as an example, and the structure of the second device provided in embodiments of this application is illustrated by using an example. As shown in FIG. 2D, the electronic device 200 (like a tablet computer) may include: a processor 210, a memory 220, a wireless communication module 230, an audio module 240, a speaker 240A, a receiver 240B, a microphone 240C, and the like.

It may be understood that the schematic structure in this embodiment constitutes no specific limitation on the electronic device 200. In some other embodiments, the electronic device 200 may include more or fewer components than those shown in the figure, or some components may be combined, or some components may be split, or a different component arrangement may be used. The components shown in the figure may be implemented in hardware, software, or a combination of software and hardware.

The processor 210 may be configured to read and execute a computer-readable instruction. Specifically, the processor 210 may include a controller, an arithmetic unit, and a register. The controller is mainly responsible for decoding an instruction, and sending a control signal for an operation corresponding to the instruction. The arithmetic unit is mainly responsible for saving a quantity of register operations, intermediate operation results, and the like that are temporarily stored during instruction execution. During specific implementation, the hardware architecture of the processor 210 may be an application specific integrated circuit (application specific integrated circuit, ASIC) architecture, a MIPS (microprocessor without interlocked piped stages) architecture, an ARM (advanced risc machines) architecture, a network processor (network processor, NP) architecture, or the like.

The memory 220 is coupled to the processor 210, and is configured to store various software programs and/or a plurality of groups of instructions. During specific implementation, the memory 220 may include a high-speed random access memory, and may also include a nonvolatile memory, for example, one or more magnetic disk storage devices, flash memory devices or other nonvolatile solid-state storage devices. The memory 220 may store an operating system, for example, an Android operation system, or an IOS operation system.

The wireless communication module 260 may provide a wireless communication solution that includes a WLAN (for example, a Wi-Fi) network), a BT, a global navigation satellite system (global navigation satellite system, GNSS), a frequency modulation (frequency modulation, FM), a NFC, an infrared technology (infrared, IR) and the like that is applied to the electronic device 200.

The electronic device 200 may implement an audio function, for example, answering a call, playing a prompt tone, and recording, by using the audio module 240, the speaker 240A, the receiver 240B, the microphone 240C, the application processor, and the like.

Software structures of the first device and the second device may be different. The following describes a software structure of the first device by using an example that the first device is the electronic device 100 (for example, the mobile phone).

FIG. 3A is a block diagram of a software structure of the electronic device 100 according to an embodiment of this application. As shown in FIG. 3A the electronic device 100 includes an application layer, a service layer, and a device connection layer.

The application layer can include application programs such as an incall user interface (incall user interface, incall UI), a contact application, and a phone application. The incall UI can provide users with interfaces during an incoming call, an outgoing call or a call, such as a dialing interface, an incoming call interface, and a call interface. The contact application can manage (add, delete, change, or synchronize) contact information. The phone application can provide users with services such as dialing, answering a call, hanging up a call, and viewing call records.

It should be noted that, only a part of the applications are shown in the figure, and the application layer may further include more applications, such as a shopping application, and a browser. This is not limited in this application.

The application layer provides an application programming interface (application programming interface, API) and a programming framework for the applications at the application layer. The service layer includes some predefined functions, for example, may include a telecom (Telecom) service, a telephony (Telephony) service, a device profile (device profile), a decision center, a call service, and the like. This is not limited in embodiments of this application.

The telecom service is used to manage calls, for example, displaying an incoming call, answering a call, and hanging up a call.

The telephony service can provide API support for a phone application, and can cooperate with hardware devices to provide voice, short messages, data links, SIM card management, phone books and other functions. The telephony service can provide users with a call function together with the telecom service and the incall UI. For example, when the telephony service receives an incoming call, it can first notify the telecom service, and the telecom service notifies the incall UI of the incoming call, to display an incoming call interface.

The device profile manages a device list. The device list includes a connection state of an electronic device (for example, the second device) that has been connected or is being connected to the electronic device 100, a supported connection mode (for example, Bluetooth, NFC, or Wi-Fi), a device name, a device type, and the like.

The decision center, also known as a HyperTerminal control center, can be pre-configured with a screening policy that can be used to filter out eligible devices from the device list.

The device connection layer includes a modem (modem), a link (link) module, an underlying module, and a basic module (not shown in the figure) that implements various basic capabilities of the electronic device 100.

The modem is configured to implement signal conversion between different devices, for example, digital signals transmitted inside devices can be converted into analog signals transmitted by a phone system, and analog signals can be converted into digital signals.

The link module is configured to provide the electronic device 100 with a function of having a communication connection with another device (for example, the second device).

The underlying module may include each hardware and the corresponding driver thereof. For example, the underlying module may include a microphone and a microphone driver, a camera and a camera driver, a sensor and a sensor driver, hardware for implementing a call function (for example, the mobile communication module 150, the antenna 1, and the antenna 2 in FIG. 2A) and a driver thereof.

The following describes a software structure of the second device by using an example that the second device is the electronic device 200 (for example, the tablet computer).

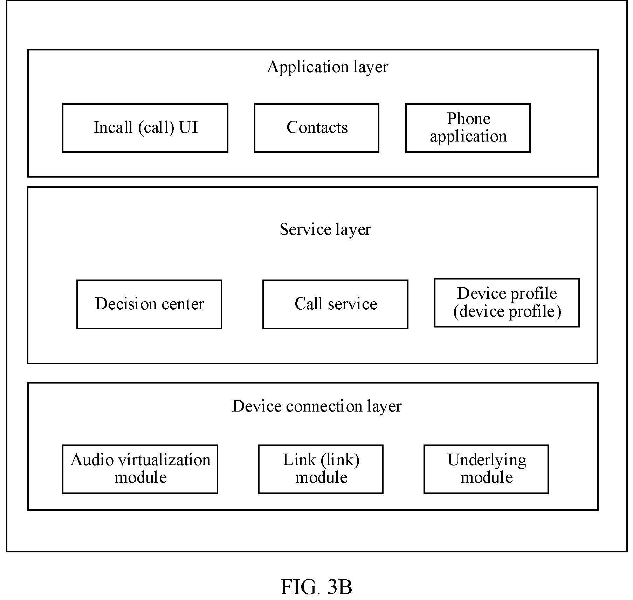

FIG. 3B is a block diagram of a software structure of the electronic device 200 of an embodiment of this application. As shown in FIG. 3B, the electronic device 200 also includes an application layer, a service layer, and a device connection layer. The software structure shown in FIG. 3B is similar to the software structure shown in FIG. 3A except that in FIG. 3B the service layer of the electronic device 200 does not include a telecom service and a telephony service, and the device connection layer of the electronic device 200 does not include a modem.

Because the electronic device 200 does not include the modem, the telecom service, and the telephony service, the electronic device 200 does not have a function of communicating with another device independently. Therefore, as shown in FIG. 3B, an audio virtualization module is provided in the device connection layer of the electronic device 200. The audio virtualization module can collect voice information or video information of a user, and transmit the collected voice information or video information to a device that has a call function (for example, the electronic device 100), and the collected voice information or video information is modulated and sent out by the device that has a call function. The audio virtualization module can also receive and play voice information or video information demodulated by the device that has a call function. Therefore, the electronic device 200 can implement intercom during a call by using the audio virtualization module through a call function of another device.

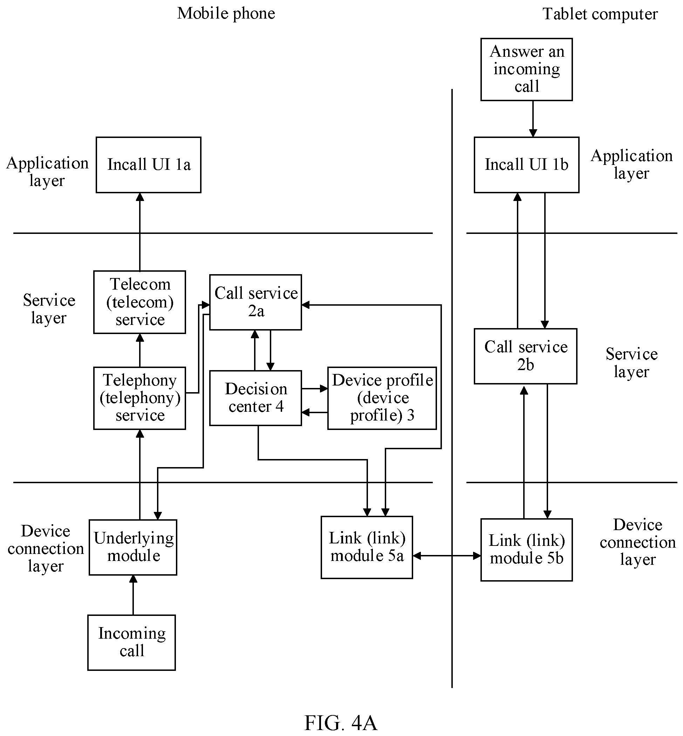

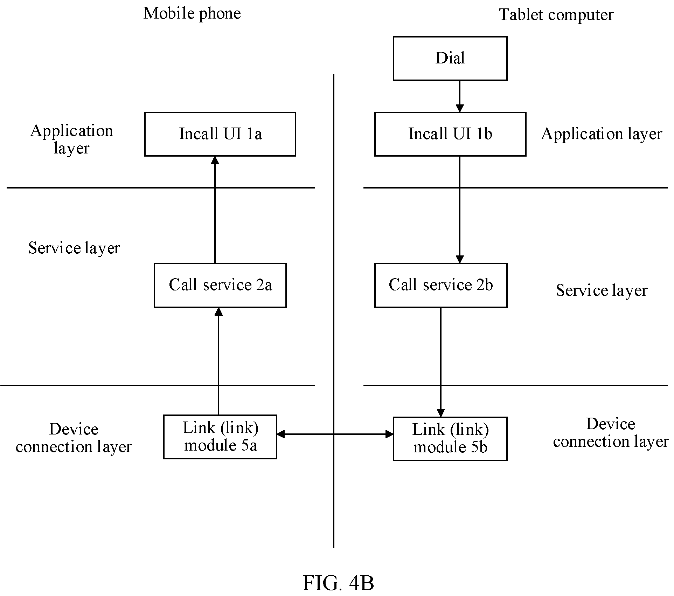

The following describes software modules and interactions between the modules related to call methods according to embodiments of this application. Implementations of calls include an incoming call and an outgoing call, and the software modules and interactions between the modules involved in an incoming call process and an outgoing call process are described in combination with FIG. 4A and FIG. 4B separately. It should be noted that, in procedures shown in FIG. 4A and FIG. 4B, a user can be making a call by using a tablet computer or making a call holding a mobile phone.

FIG. 4A shows an interaction diagram of software modules and when the user receives a new incoming call during a call. As shown in FIG. 4A, after the mobile phone receives the incoming call, the underlying module can interact with a telephony service of a service layer, the telephony service can interact with a telecom service, and the telecom service can interact with an incall UI 1a of an application layer, to transmit incoming call information (for example, an incoming call number, and a number attribution) obtained by an underlying module 1 to the incall UI 1a. The incall UI 1a can draw an incoming call interface based on the incoming call information, to remind the user to answer the incoming call. The telephony service may also interact with a call service 2a, the call service 2a may interact with a decision center 4 and a device profile 3, so that the device profile 3 queries a device list and transmits the queried device list to the decision center 4. The decision center 4 may select a target device (for example, a tablet computer) from the device list. The decision center 4 may transmit identification information of the target device to the call service 2a and a link module 5a. The call service 2a may further send a prompt instruction to the link module 5a, where the prompt instruction carries the incoming call information. The link module 5a can send the prompt instruction to a link module 5b of the tablet computer. The link module 5b can send the prompt instruction to an incall UI 1b through a call service 2b, and in response to the prompt instruction, the incall UI 1b draws an incoming call interface based on the incoming call information. When a user answers a call through the incoming call interface of the tablet computer, the incall UI 1b can interact with the call service 2b, the call service 2b can interact with the link module 5b, the link module 5b can interact with the link module 5a, and the link module 5a can interact with the call service 2a, so that the call service 2a receives and processes call data. The call service 2a may continue to interact with the link module 5a, the link module 5a may interact with the link module 5b, the link module 5b may interact with the call service 2b, and the call service 2b may interact with the incall UI 1b, so that the incall UI 1b changes the incoming call interface.

FIG. 4B shows an interaction diagram of software modules when the user dials a third person during a call with another user. As shown in FIG. 4B, after the user dials on the incall UI 1b of the tablet computer, the incall UI 1b may draw an outgoing call interface. The incall UI 1b may also interact with the call service 2b, the call service 2b may interact with the link module 5b, so that the link module 5b obtains call signaling. The call signaling may include a dialed number. The link module 5b may continue to interact with the link module 5a, so that the link module 5a obtains the call signaling. The link module 5a may continue to interact with the call service 2a, the call service 2a may interact with the incall UI 1a, so that the incall UI 1a draws an outgoing call interface based on the number carried in the call signaling.

It can be seen that when the user is making a call, the user can use a device other than a device currently in a call to answer an incoming call or dial a number. This reduces influence of a user operation on the current call.

The communication methods according to embodiments of this application have different procedures under different application scenarios. The following introduces specific procedures of the communication methods according to embodiments of this application in several different scenarios with reference to accompanying drawings.

The application scenarios of the call methods according to embodiments of this application include:
Scenario 1: During a call, a user receives a new incoming call. For example, when a user receives a new incoming call when making a call by using a device 1, the user can answer the new incoming call by using a device 2.
Scenario 2: During a call, a user needs to dial to a third person. For example, when a user is making a call by using a device 1, the user can make an outgoing call to a third person by using a device 2.
Scenario 3: There are two incoming calls at the same time. In this case, the two incoming calls can be reminded in sequence based on a quantity of SIM cards supported by a mobile phone, a user intention, and a device priority.

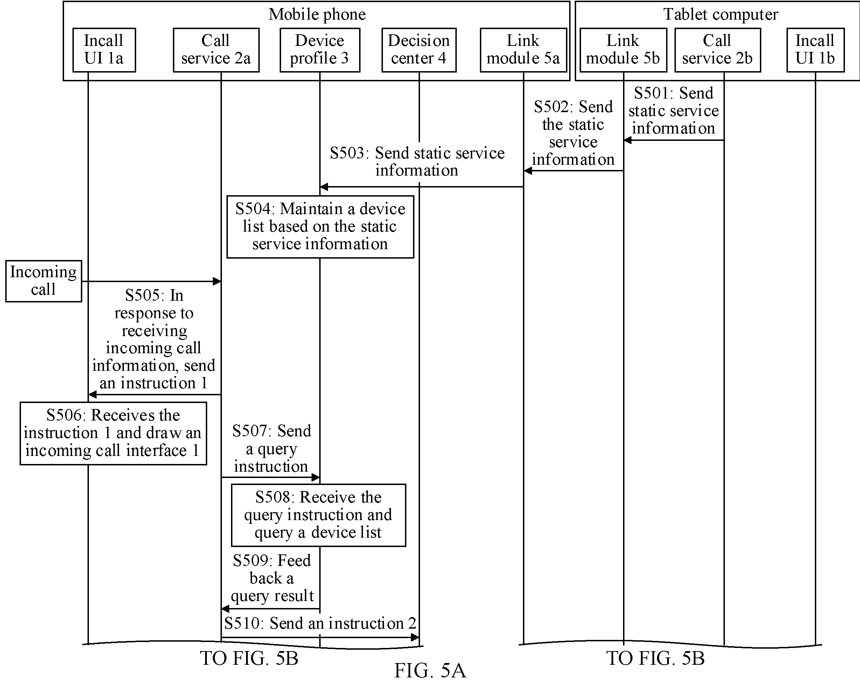

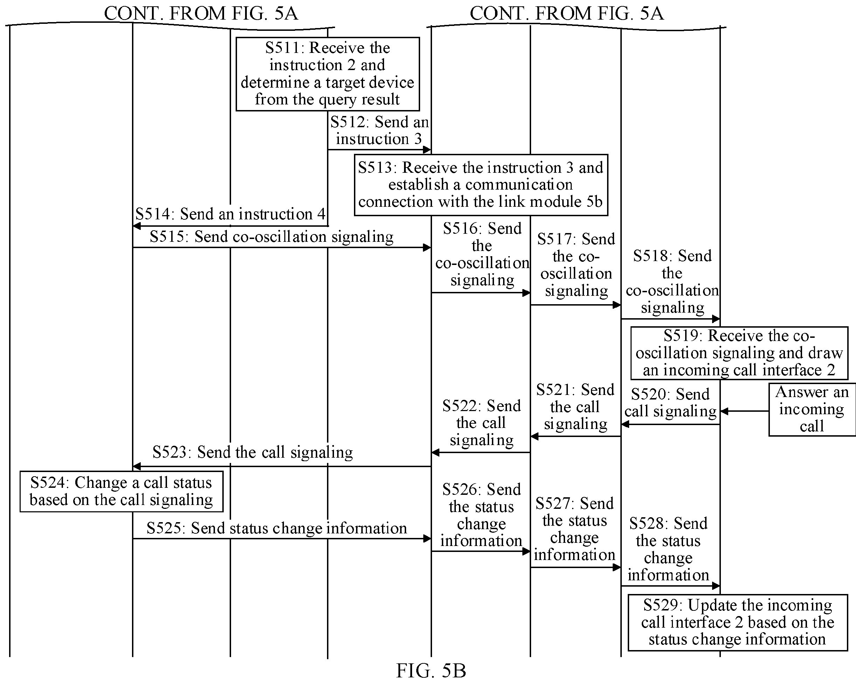

The following describes a call method in Scenario 1 by using an example in which a user is making a call by using a device 1 (for example, a mobile phone). A device 2 may be a tablet computer, a PC, or the like. In FIG. 5A and FIG. 5B, the tablet computer is used as an example for description. FIG. 5A and FIG. 5B are a flowchart of a call method according to an embodiment of this application. The method includes the following steps:
S501: A call service 2b sends static service information to a link module 5b.

The static service information includes profile (profile) information of a tablet computer, use state information, a supported connection manner, and the like.

The profile information includes information like a type of profile supported by the tablet computer, and a version of the supported profile.

The use state information indicates a current working condition of the tablet computer, for example, whether there is a foreground application on the tablet computer, whether an input device of the tablet computer (for example, a touchscreen, a button) receives an operation of a user, and whether a display, a camera, a pickup, a microphone and the like of the tablet computer are working.

The use state of the tablet computer can be evaluated based on whether the tablet computer is interacting with a user. For example, the use state may include a use state and an unused state. When the tablet computer is currently running with a foreground application, it is evaluated that the tablet computer is in the use state. When the tablet computer is interacting with the user, it is evaluated that the tablet computer is in the use state. For example, when an input device (for example, a touchscreen, or a button) of a tablet computer (or notebook) receives a user operation, a camera of the tablet computer recognizes that a user is facing a screen of the tablet computer, or a display, camera, pickup, microphone, and the like, of the tablet computer (or notebook) is working, it can be confirmed that the tablet computer is interacting with the user. As an implementation, the tablet computer can evaluate the use state of the tablet computer by using an artificial intelligence model combined with real-time operation data of the tablet computer.

S502: The link module 5b sends the static service information to a link module 5a.

Refer to S501 for descriptions of the static service information. Details are not described herein again.

That is, the call service 2b may forward the static service information to the link module 5a through the link module 5b.

S503: The link module 5a sends the static service information to a device profile (device profile) 3.

S504: The device profile 3 maintains a device list based on the static service information.

According to the above, the device list includes a connection status of an electronic device (for example, a tablet computer) connected or being connected to the mobile phone, a supported connection mode (for example, Bluetooth, NFC, or Wi-Fi), a device name, a device type, and the like. The device profile 3 receives this static service information, and may update the device list.

It may be understood that, the device profile 3 may alternatively receive static service information sent by another device (for example, a PC, and a smart watch) and maintain a device list based on the static service information sent by the another device.

S505: In response to receiving incoming call information, a call service 2a sends an instruction 1 to an incall UI 1a.

After a mobile phone receives an incoming call, an underlying module of the mobile phone can interact with a telephony service of a service layer, to transmit the incoming call information obtained by the underlying module to the telephony service, and the incoming call information may include an incoming call number, a number attribution, and other information. The telephony service may also send the incoming call information to the call service 2a.

The instruction 1 carries the incoming call information.

S506: The incall UI 1a receives the instruction 1 and draws an incoming call interface 1.

The incall UI 1a can draw the incoming call interface 1 based on the incoming call information, and the incoming call interface 1 can include an incoming call number, a number attribution, an acceptance control, a rejection control, and the like, so that a user can answer or hang up an incoming call through the incoming call interface 1. The incoming call interface 1 may also be referred to as a sixth interface.

Optionally, the call service 2a may also send an instruction (not shown in the figure) to the underlying module, so that the underlying module rings and/or vibrates, to remind the user to answer the incoming call.

S507: The call service 2a sends a query instruction to the device profile 3.

It should be noted that, there is no strict sequence between S505 to S507. After receiving the incoming call information, the call service 2a may first execute S505 and S506 and then S507, or may first execute S507 and then S505 and S506, or may simultaneously execute S505 and S507. This is not specifically limited herein.

S508: The device profile 3 receives the query instruction and queries the device list.

As mentioned above, the device list is maintained in the device profile 3. After receiving the query instruction, the device profile 3 can query a device that can communicate with the mobile phone from the device list, to obtain a query result. The device that can communicate with the mobile phone can refer to an electronic device that supports Bluetooth/Wi-Fi/NFC and another communication mode is located near the mobile phone, and logs in a same system authentication account with the mobile phone, for example, a tablet computer.

S509: The device profile 3 feeds back the query result to the call service 2a.

S510: The call service 2a sends an instruction 2 to a decision center 4.

The instruction 2 (which is also referred to as a third instruction) carries the query result.

S511: The decision center 4 receives the instruction 2 and determines a target device from the query result.

In this embodiment of this application, the decision center 4 can determine the target device in different ways based on the device currently in a call.

When the device currently in a call is a mobile phone (that is, the user is making a call by using the mobile phone), the target device meets at least one of the following conditions:
First, the target device can remind the user to answer an incoming call in time. In some embodiments, a decision center may evaluate a device that can remind the user to answer an incoming call in time in a communication system based on a use state of the device.
Second, the target device has a higher priority. A device type priority is configured in the mobile phone. For example, the device type priority can be that a priority of a smart watch is higher than that of a tablet computer, a priority of the tablet computer is the same as that of a PC, and the priority of the PC is higher than that of a smart big screen. At the same time, the device type priority can also be updated, for example, the mobile phone can modify the device type priority in response to a user operation.
Third, there is no collaboration conflict between the target device and the mobile phone. For example, when the mobile phone does not turn on a collaborative calling function, it can be determined that there is a collaboration conflict between the mobile phone and another device in the communication system. For example, when the mobile phone pre-lists the PC into a list that prohibits collaborative calling, it can also be determined that there is a collaboration conflict between the PC and the mobile phone. In this way, in a process of determining the target device from the query result, the decision center can first screen out the device that has a collaboration conflict with the mobile phone in the query result, and then determine the target device.

For example, when the communication system includes a mobile phone, a smart watch and a tablet computer, and there is no collaboration conflict between the mobile phone, a smart watch, and the tablet computer, the decision center 4 can take a watch with a higher priority as the target device. For another example, when the communication system includes the mobile phone, a smart watch, and the tablet computer, but there is a collaboration conflict between the mobile phone and the smart watch, and there is no collaboration conflict between the mobile phone and the tablet computer, the decision center 4 may take the tablet computer as the target device.

When the device currently in a call is not the mobile phone (that is, the user is using a device other than the mobile phone to make a call), the target device is the device currently in a call. For example, when the user is making a call by using the tablet computer, the target device is the tablet computer. When the user is making a call by using a PC, the target device is the PC. It may be understood that, by determining the target device in the foregoing manner, it is possible to selectively enable another device in the communication system to remind the user to answer an incoming call, to avoid inconvenience to the user caused by simultaneous reminding by all devices.

As mentioned above, in this embodiment of this application, the user is making a call by using the mobile phone, the decision center 4 can determine the target device, for example, the tablet computer, according to the manner described above. Certainly, when the user is making a call by using the tablet computer, the decision center 4 may execute S512 after determining the device (the tablet computer) currently in a call as the target device.

S512: The decision center 4 sends an instruction 3 to the link module 5a.

The instruction 3 (which is also referred to as a fourth instruction) also includes an identifier of the tablet computer. It may be understood that, when the decision center 4 determines that there are a plurality of target devices, the instruction 3 may carry identifiers of a plurality of target devices.

S513: The link module 5a receives the instruction 3, and the link module 5a establishes a communication connection with the link module 5b.

The link module 5a may establish a communication connection with the link module 5b of the tablet computer based on the identifier of the tablet computer.

S514: The decision center 4 sends an instruction 4 to the call service 2a.

The instruction 4 includes the identifier of the tablet computer. It may be understood that, when the decision center 4 determines that there are a plurality of target devices, the instruction 4 may carry identifiers of a plurality of target devices.

S515: The call service 2a sends co-oscillation signaling to the link module 5a.

The co-vibration signaling (which is also referred to as a first instruction) can carry incoming call information and an identifier of the mobile phone. This is convenient for the tablet computer to determine a source of the incoming call information and understand an incoming call situation.

S516: The link module 5a sends the co-oscillation signaling to the link module 5b.

S517: The link module 5b sends the co-oscillation signaling to the call service 2b.

That is, the call service 2a can send the co-oscillation signaling to the call service 2b through the link module 5a and the link module 5b.

S518: The call service 2b sends the co-oscillation signaling to the incall UI 1b.

S519: The incall UI 1b receives the co-oscillation signaling and draws an incoming call interface 2.

The incall UI 1b can draw the incoming call interface 2 based on the incoming call information, and the incoming call interface 2 can include an incoming call number, a number attribution, an acceptance control, a rejection control, and the like, so that the user can answer or hang up an incoming call through the incoming call interface 2. The incoming call interface 2 may also be referred to as a seventh interface.

Optionally, the call service 2b may also send an instruction (not shown in the figure) to the underlying module 2, so that the underlying module 2 rings and/or vibrates, to remind the user to answer the incoming call.

It can be learned that, when the user is making a call (for example, making a first call) by using the mobile phone, when a second incoming call is received, the mobile phone may display the incoming call interface 1, and the tablet computer may display the incoming call interface 2, to provide the user with ways to answer incoming calls on a plurality of different devices.

In order to reduce influence of an operation of the user on the current call, the user can answer or hang up the second incoming call by using the tablet computer. On this basis, the procedure can enter S519.

S520: The incall UI 1b sends call signaling to the call service 2b.

The call signaling may include answer signaling (which is also referred to as a first instruction) or hang-up signaling. The answer signaling is used to instruct the mobile phone to answer the second incoming call, and the hang-up signaling is used to instruct the mobile phone to hang up the second incoming call.

S521: The call service 2b sends the call signaling to the link module 5b.

S522: The link module 5b sends the call signaling to the link module 5a.

S523: The link module 5a sends the call signaling to the call service 2a.

S524: The call service 2a changes a call status based on the call signaling.

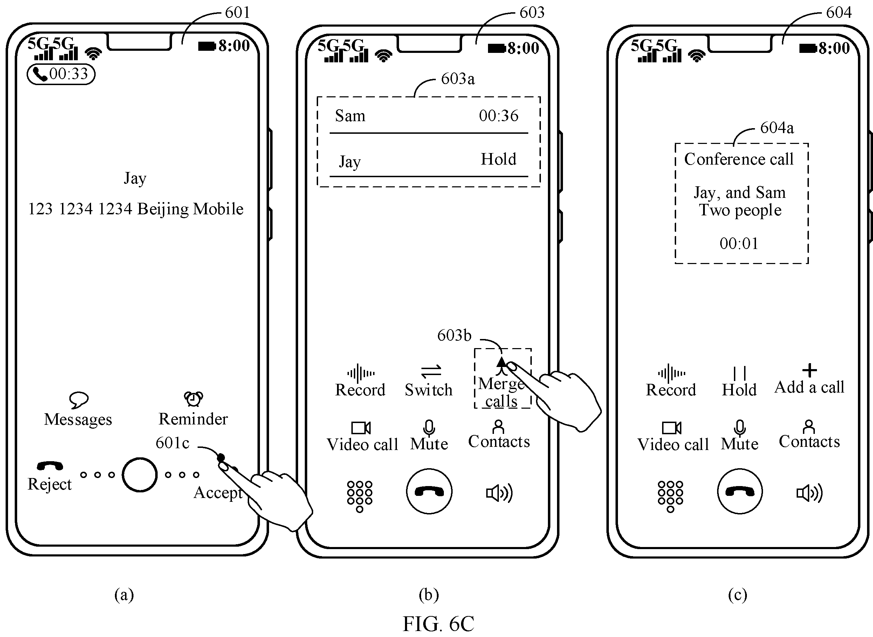

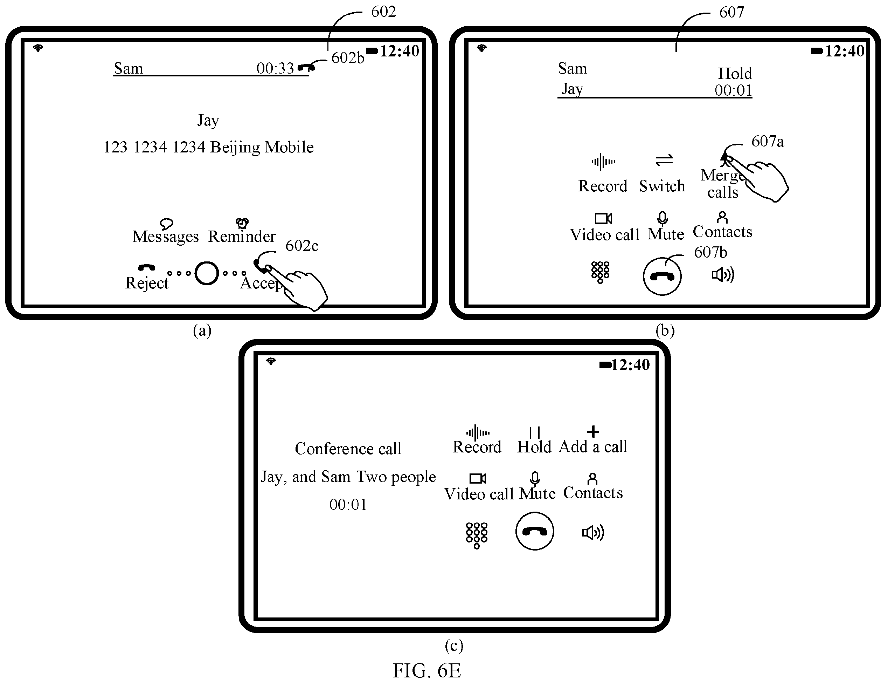

When the call signaling is hang-up signaling, the call service 2a can hang up the second call. When the call signaling is answer signaling, the call service 2a can connect the second call. On this basis, when the mobile phone is a single-card mobile phone (that is, supports only one SIM card), the mobile phone can set the first call to call hold and provide the user with an option to merge the first call and the second call (refer to FIG. 6C for details). When the mobile phone is a dual-card mobile phone (that is, supports two SIM cards), the mobile phone can forward call data of the second call to the tablet computer, so that the user can make the second call by using the tablet computer and the first call by using the mobile phone (as shown in FIG. 6E to FIG. 6F).

S525: The call service 2a sends status change information to the link module 5a.

The status change information indicates a call status that is of the second incoming call and that includes be answered and being hung up.

S526: The link module 5a sends the status change information to the link module 5b.

S527: The link module 5b sends the status change information to the call service 2b.

S528: The call service 2b sends the status change information to the incall UI 1b.

S529: The incall UI 1b updates the incoming call interface 2 based on the status change information.

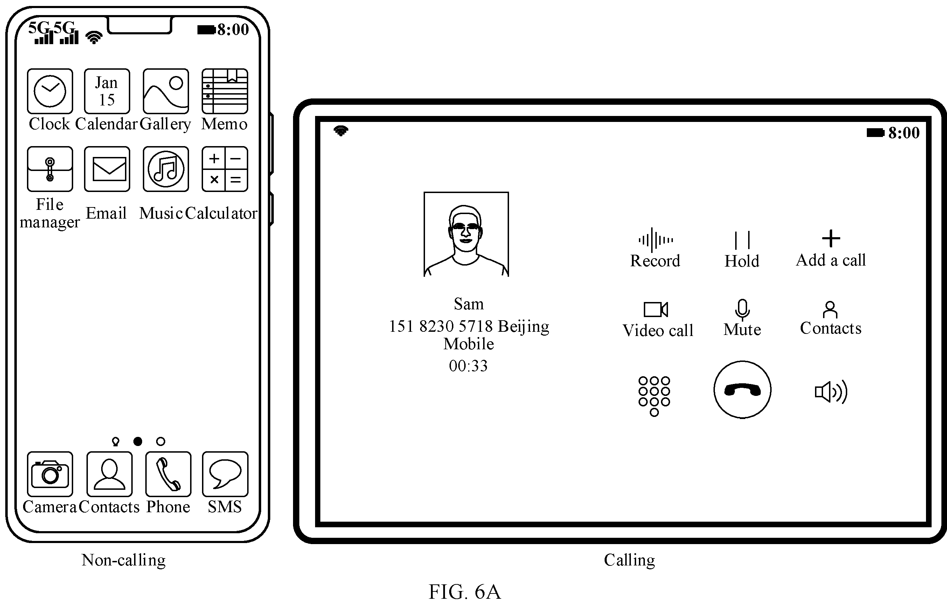

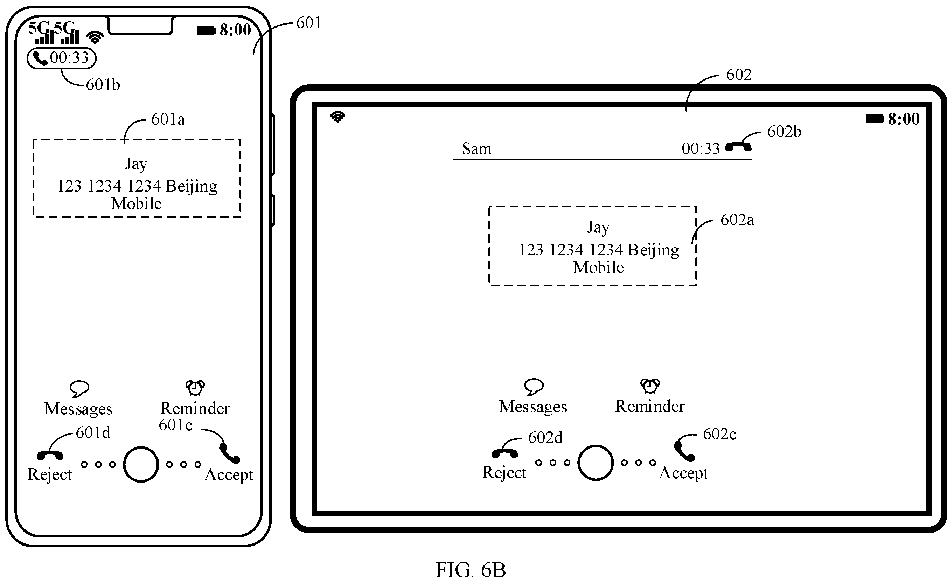

For example, as shown in FIG. 6A, A mobile phone of Xiaoyi is in a non-calling state, and a tablet computer of Xiaoyi is in a calling state, that is, Xiaoyi is making a call with Sam by using the tablet computer, and the mobile phone of Xiaoyi can support only one SIM card. When Jay calls Xiaoyi at this time, as shown in FIG. 6B, the mobile phone of Xiaoyi can display an interface 601 (namely, an incoming call interface 1, which may also be referred to as a sixth interface), and the tablet computer of Xiaoyi can display an interface 602 (namely, an incoming call interface 2, which may also be referred to as a seventh interface). The interface 601 includes incoming call information 601a, a control 601b (which may also be referred to as a control for managing a first call), an acceptance control 601c (which may also be referred to as a fourth control), a rejection control 601d, and the like. The interface 602 includes incoming call information 602a, a control 602b (which may also be referred to as a control for managing a second call), an acceptance control 602c (which may also be referred to as a fifth control), a rejection control 602d, and the like. The incoming call information 601a and the incoming call information 601b include an incoming call number (for example, "123 1234 1234"), an attribution of the incoming call number (for example, Beijing Mobile). When a contact name corresponding to the incoming call number is stored in an address book, the incoming call information 601a and the incoming call information 601b also include the contact name (for example, Jay). The control 601b and the control 602b may indicate a call status of the current call (namely, the first call), for example, indicates that call duration of the first call is 33 seconds, and hangs up the first call. The acceptance control 601c and the acceptance control 602c are used to answer the second call (namely, an incoming call from Jay), the rejection control 601d and the rejection control 602d are used to hang up the second call (namely, the incoming call from Jay).

In the scenario shown in FIG. 6B, Xiaoyi can answer/hang up an incoming call from Jay and manage a call with Sam. The following is an example in which Xiaoyi performs related operations by using a mobile phone, to introduce related interfaces.

When Xiaoyi wishes to answer the incoming call from Jay, as shown in (a) in FIG. 6C, the mobile phone can receive an operation of the user tapping the acceptance control 601c, and in response to this operation, the mobile phone connects the incoming call from Jay and sets the incoming call from Sam to call hold. As shown in (b) in FIG. 6C, the mobile phone may further display an interface 603 (which is also referred to as an eighth interface). The interface 603 includes an area 603a, a call merging control 603b (which is also referred to as a sixth control), and the like. The area 603a is used to display a status of the first call (for example, the call between Xiaoyi and Sam is in the call hold state) and a status of the second call (for example, Xiaoyi is making a call with Jay and call duration is one second). On this basis, when Xiaoyi wants to merge two calls, Xiaoyi can tap the call merging control 603b, and the mobile phone can receive the operation of the user of tapping the call merging control 603b. In response to the operation, the mobile phone can merge the first call and the second call, and display an interface 604 as shown in (c) of FIG. 6C. The interface 604 may include conference information 604a, related controls, and the like. The conference information 604a may include participants and conference duration. For example, the participants include Jay and Sam, and the conference duration is one second. When an incoming call number is not included in an address book, a participant can be replaced by a phone number. For example, when phone numbers of Jay and Sam are not stored in an address book, the names of Jay and Sam are not displayed in the interface 601, the interface 602, the interface 603, and the interface 604, but only the phone numbers of Jay and Sam are displayed.

When Xiaoyi wishes to continue answering the call of Sam and hang up the call of Jay, the user can tap the rejection control 601d, and in response to the operation of the user of tapping the rejection control 601d, the mobile phone can hang up the incoming call of Jay. In this case, the user can continue to answer the incoming call of Sam by using the tablet computer.

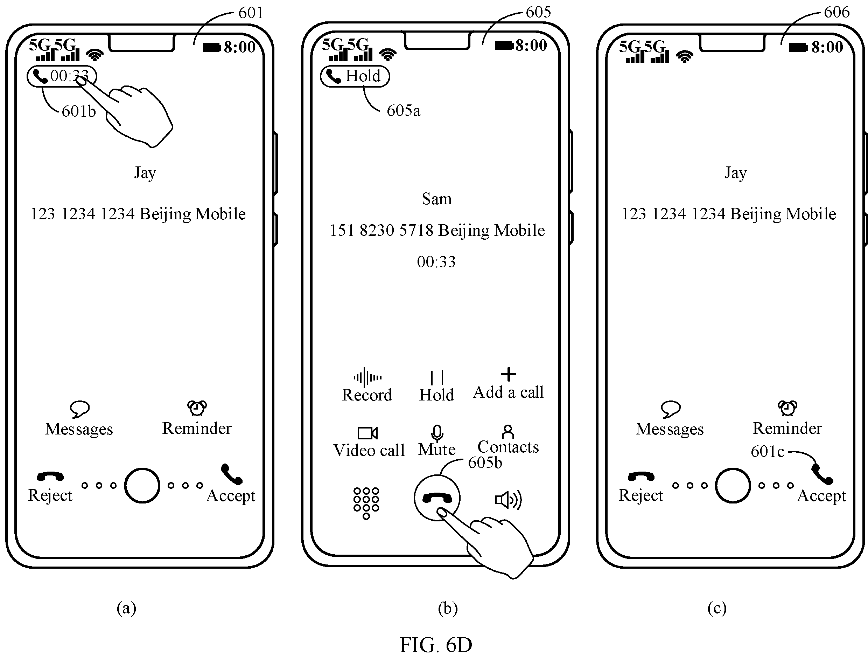

If Xiaoyi wishes to answer the call of Jay and hang up the call of Sam, as shown in (a) in FIG. 6D, the user can tap the control 601b, and in response to this operation, the mobile phone can display an interface 605 (which is also referred to as a ninth interface). The interface 605 may include a control 605a, a rejection control 605d (which is also referred to as a seventh control), incoming call information, and another related control. The control 605a indicates the call status of the second incoming call (for example "hold"). As shown in (b) of FIG. 6D, the mobile phone may receive an operation of the user of tapping the rejection control 605b, and in response to the operation, the mobile phone may hang up the first call (for example, the call between Xiaoyi and Sam) and display an interface 606 (which is also referred to as a tenth interface) as shown in (c) of FIG. 6D. The interface 606 is similar to the interface 601 in that the interface 606 also includes an acceptance control 601c (which is also referred to as an eighth control) except that the interface 606 does not include a control 601b. In the interface 606 shown in (c) of FIG. 6D, the user can tap the acceptance control 601c to answer the call of Jay.

The user can alternatively ignore the second call (namely, the call of Jay). The user does not need to perform any operation on the mobile phone or the tablet computer, and the mobile phone and the tablet computer can automatically hang up the second call after preset time of receiving the second call.

To reduce influence of an operation of the user on the first call, the user can alternatively answer/hang up the incoming call of Jay by using the tablet computer. As shown in (a) of FIG. 6E, the tablet computer may receive an operation of the user of tapping the acceptance control 602c, and in response to the operation, the tablet computer may send answer signaling (which is also referred to as a first instruction) to the mobile phone. After receiving the answering signaling, the mobile phone connects the call with Jay, sets the call with Sam to a call hold state, and sends, to the tablet computer, indication information (which is also referred to as second call status information) for indicating that the call with Jay is connected. After receiving the indication information, the tablet computer may display an interface 607 (which is also referred to as an eleventh interface) as shown in (b) of FIG. 6E. The interface 607 includes a call merging control 607a (which may be referred to as a ninth control) and a rejection control 607b. When Xiaoyi wishes to merge the call of Jay and the call of Sam, she can tap the call merging control 607a. The tablet computer may receive an operation of the user of tapping the call merging control 607a, and in response to the operation, the tablet computer sends a call merging instruction to the mobile phone. After receiving the call merging instruction, the mobile phone can merge the call of Jay and the call of Sam. In this way, as shown in (c) of FIG. 6E, Xiaoyi can conduct a conference call with Jay and Sam by using the tablet computer, and call data during the conference call can be forwarded through the mobile phone. If the user wishes to hang up the incoming call of Jay, she can tap the rejection control 607b. In response to the operation of the user on the rejection control 607b, the tablet computer sends a rejection instruction to the mobile phone. After receiving the rejection instruction, the phone can hang up the incoming call of Jay and resume the call with Sam (that is, no longer set the call to call hold).

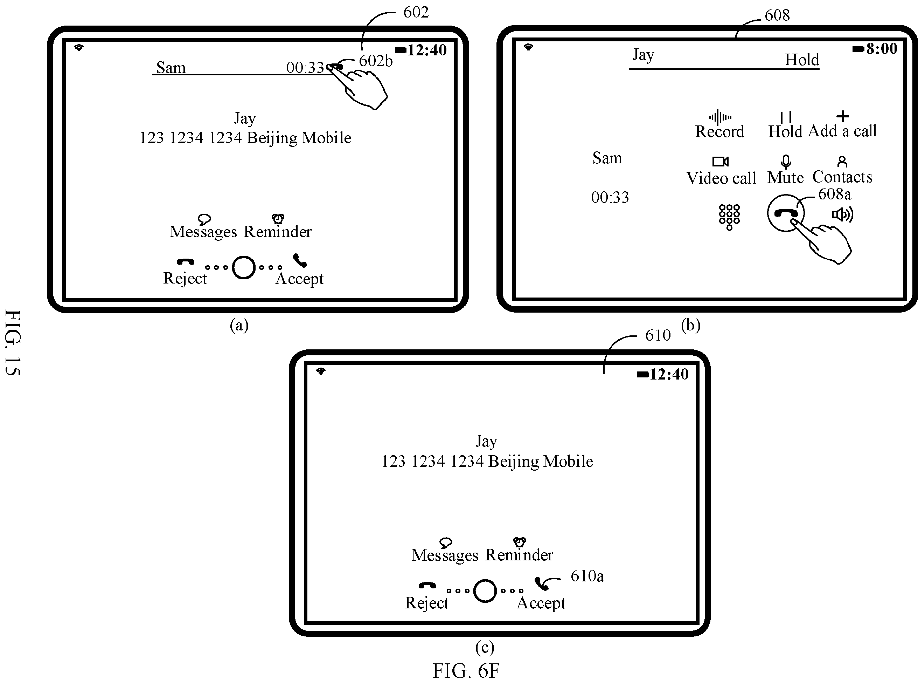

Similarly, users can alternatively manage the call of Sam by using the tablet computer. For example, as shown in (a) in FIG. 6F, the tablet computer may receive an operation of the user of tapping the control 602b, and in response to the operation, as shown in (b) in FIG. 6F, the tablet computer may display an interface 608 (which is also referred to as a twelfth interface), and the interface 608 may include an answering rejection control 608a (which is also referred to as a tenth control). When the user wishes to hang up the call of Sam, she can tap the answering rejection control 608a. In response to receiving the operation of the user of tapping the answering rejection control 608a, the tablet computer sends a hang-up instruction to the mobile phone. After receiving the hang-up instruction, the mobile phone can hang up the call of Sam and send a hang-up notification to the tablet computer. After receiving the hang-up notification, the tablet computer may display an interface 609 (which is also referred to as a thirteenth interface) as shown in (c) of FIG. 6F. Similar to the interface 602, the interface 602 also includes an acceptance control 602c except that the interface 609 does not include the control 602b. On this basis, the user may tap the acceptance control 602c, and in response to receiving the operation of the user of tapping the acceptance control 602c, the tablet computer may send answer signaling to the mobile phone, so that the mobile phone connects the incoming call of Jay. In this way, the user can make a call with Jay by using the tablet computer, and call data generated during the call can be forwarded through the mobile phone.

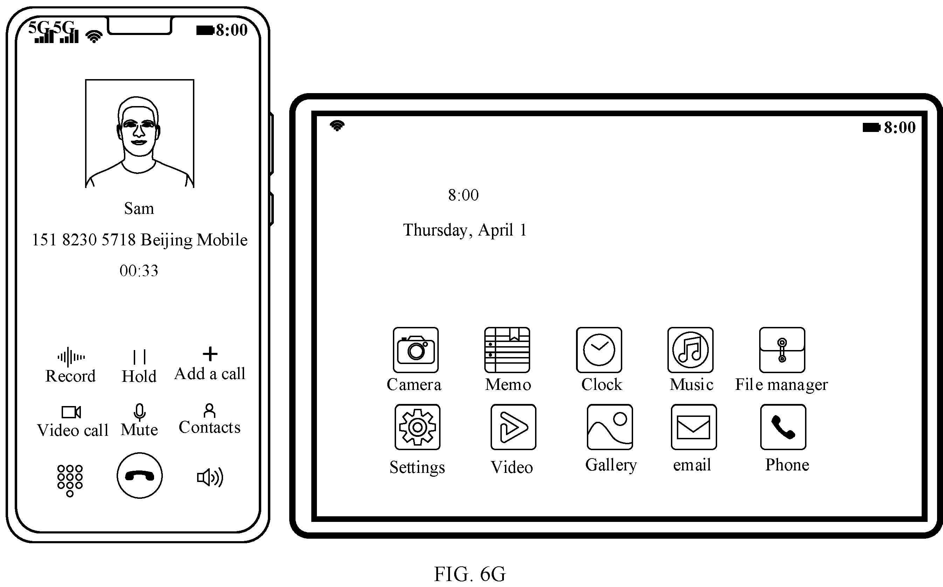

As an example, when the mobile phone of Xiaoyi supports a plurality of SIM cards, for example, includes a SIM card 1 (which is also referred to as a first SIM card) and a SIM card 2 (which is also referred to as a second SIM card). As shown in FIG. 6G, Xiaoyi make a call with Sam through the SIM card 1 of the mobile phone, and the tablet computer of Xiaoyi is in the non-calling state. When Jay calls the SIM card 1 of Xiaoyi at this time, related interfaces are similar to that displayed when the mobile phone is a single-card mobile phone. For specific contents, refer to FIG. 6B to FIG. 6F. Details are not described herein again.

When Jay calls the SIM card 2 of Xiaoyi at this time, the mobile phone of Xiaoyi can still display the interface 601 shown in FIG. 6B (namely, the incoming call interface 1), and the tablet computer of Xiaoyi can still display the interface 602 shown in FIG. 6B (namely, the incoming call interface 2). When the user wishes to answer the call of Jay and the call of Sam at the same time, the tablet computer and mobile phone connect the first call and the second call respectively.

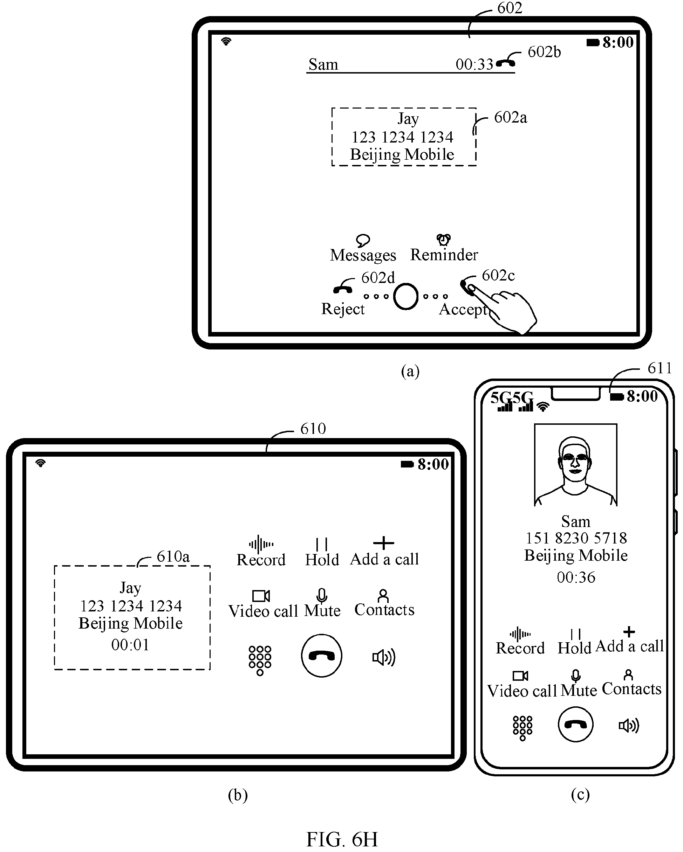

As shown in (a) in FIG. 6H, the tablet computer may receive an operation of the user of tapping the acceptance control 602c, and in response to the operation, the tablet computer sends answer signaling to the mobile phone. After receiving the answering signaling, the mobile phone can connect the call with Jay and feed back status change information to the tablet computer. Based on the status change information, the tablet computer displays an interface 610 as shown in (b) in FIG. 6H. The interface 610 includes call information 610a, for example, Jay and a phone number (123 1234 1234) of Jay and call duration (for example, one second). In addition, as shown in (c) of FIG. 6H, the mobile phone may display an interface 611 after receiving the answer signaling. The interface 611 is similar to the interface 601 except that the interface 611 does not include the control 601b, because the user has answered the call of Jay by using the tablet computer. In this way, the user can continue to make a call with Sam by using the mobile phone and make a call with Jay by using the tablet computer. This can reduce influence of an operation of the user on the first call, and enable the user to answer two calls at the same time.

The user can alternatively continue to answer the call of Sam and hang up the call of Jay, answer the call of Jay and hang up the call of Sam, or ignore an incoming call of Jay. Interfaces and principles are similar to those when the user uses the mobile phones. For details, refer to FIG. 6D and related descriptions. Details are not described herein again.

It can be learned that, when a user is making a call and the user receives an incoming call from another user, a mobile phone of the user and at least one other device remind the user to answer the incoming call at the same time. This provides the user with a way to answer the incoming call with a device other than the currently used device (namely, a device currently answering the call), reduces influence of an operation of the user on the call, and improves user experience.

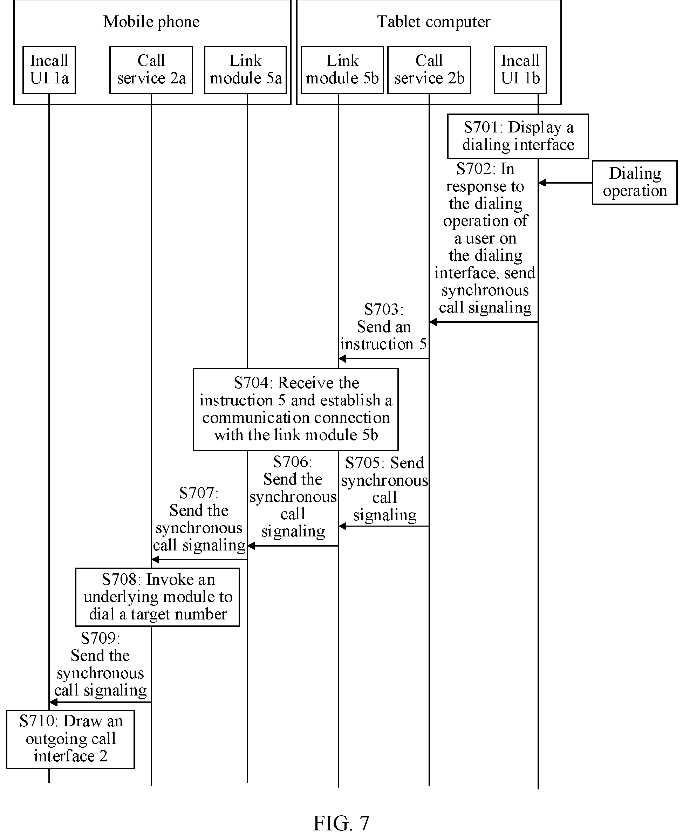

Next, a call method under Scenario 2 is explained by using an example in which the user is making a call by using a mobile phone (the device 1). FIG. 7 is a flowchart of a call method according to an embodiment of this application. The method includes the following steps:
S701: An incall UI 1b displays a dialing interface.

The dialing interface (which is also referred to as a second interface) may be an interface displayed by a tablet computer in response to a user opening a call application installed on the tablet computer.

S702: In response to a dialing operation of the user on the dialing interface, the incall UI 1b sends synchronous call signaling to a call service 2b.

The synchronous call signaling (which is also referred to as a dialing instruction) includes a target number, and the target number is a phone number dialed by the user. Optionally, in response to the dialing operation of the user on the dialing interface, the incall UI 1b may further draw an outgoing call interface (for example, an outgoing call interface 1).

S703: The call service 2b sends an instruction 5 to a link module 5b.

The instruction 5 (which is also referred to as a second instruction) includes an identifier of a mobile phone. It may be understood that, since a call needs to be implemented by a mobile phone with a mobile communication function, the call service 2b does not need to query a device list and can directly use the mobile phone as a target device.

Alternatively, when a plurality of mobile phones are included in a trust ring, the tablet computer can also query the device list, select a target mobile phone based on a use state of the plurality of mobile phones, and encapsulate an identifier of the target mobile phone in the instruction 5 and send the instruction 5.

Alternatively, when the dialing interface is displayed on a screen, the dialing interface includes a control for selecting which mobile phone to use for dialing, or after the user taps the dial control, a selection pop-up window is provided to the user, and the pop-up window includes controls for selecting different mobile phones for dialing. Synchronous call signaling is sent to the call service 2b based on a mobile phone selected by the user, and the synchronous call signaling includes an identifier of the mobile phone selected by the user. The call service sends an instruction 5 to the link module based on the identifier that is of the mobile phone selected by the user and that is in the synchronous call signaling.

S704: The link module receives the instruction 5, and the link module 5b establishes a communication connection with a link module 5a.

S705: The call service 2b sends the synchronous call signaling to the link module 5b.

For a description of the synchronous call signaling, refer to S702.

S706: The link module 5b sends the synchronous call signaling to the link module 5a.

S707: The link module 5a sends the synchronous call signaling to a call service 2a.

S708: The call service 2a invokes an underlying module to dial the target number.

S709: The call service 2a sends the synchronous call signaling to an incall UI 1a.

S710: The incall UI 1a draws an outgoing call interface 2.

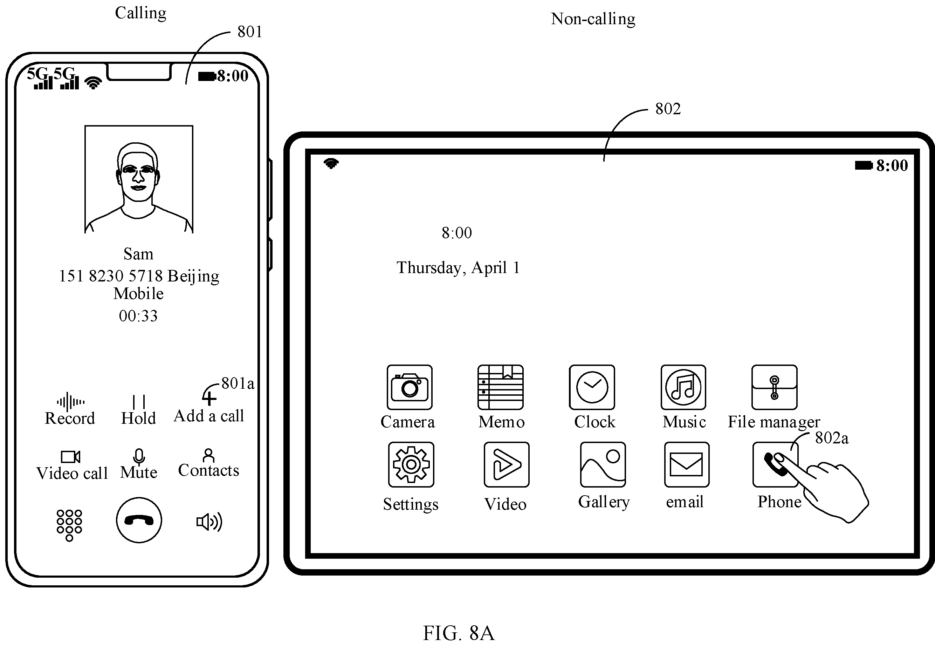

For example, a mobile phone of Xiaoyi is in a calling state, and a tablet computer of Xiaoyi is in a non-calling state, that is, Xiaoyi is making a call with Sam by using the mobile phone. As shown in FIG. 8A, the mobile phone may display an interface 801, and the tablet computer may display an interface 802 (which is also referred to as a first interface). The interface 801 includes call information and related controls. For example, the call information includes Sam, a phone number of Sam (for example, 151 8230 5718, Beijing Mobile), call duration (for example, 33 seconds), and the like. The related controls include a call adding control 801a, a hold control, a rejection control, and the like. The interface 802 may include an icon 802a of "Phone" (which may also be referred to as a first application). When the user wishes to call Jay, the user can tap the call adding control 801a on the interface 801, but dialing Jay through this call adding control 801a affects the call between Xiaoyi and Sam. To reduce influence of an operation of the user on the current call, the users can alternatively dial Jay by using the tablet computer.

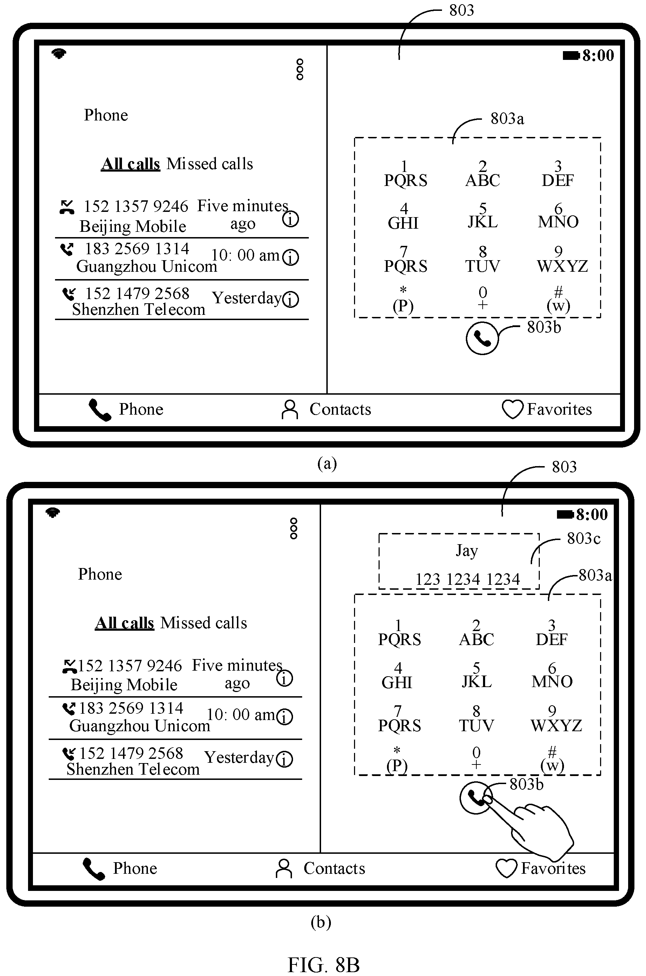

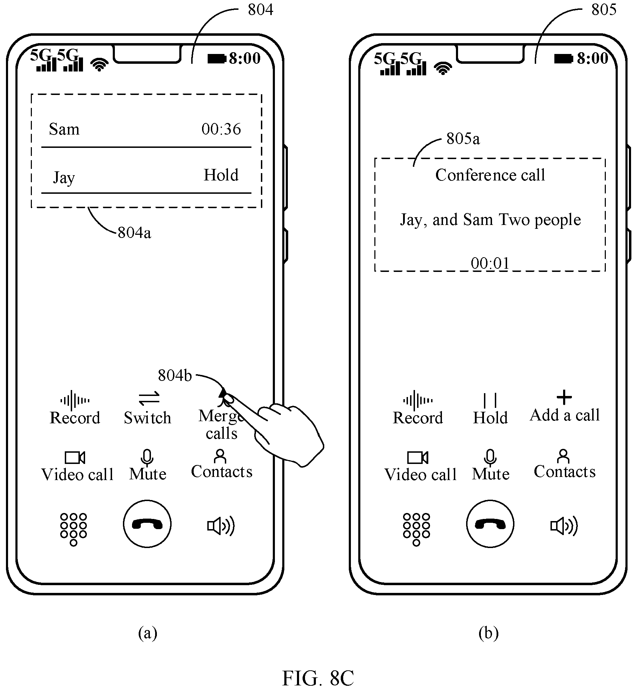

When the mobile phone supports only one SIM card, as shown in FIG. 8A, the tablet computer may receive an operation of the user of tapping the icon 802a, and in response to the operation, as shown in (a) in FIG. 8B, the tablet computer may display an interface 803 (which is also referred to as a dialing interface, a second interface). The interface 803 includes a dial 803a, a dial control 803b, a history call record, and the like. The dial 803a can be used by the user to input a phone number; and the dial control 803b allows the user to dial after inputting the phone number. If Xiaoyi needs to call Jay, Xiaoyi can input a phone number of Jay in the dial 803a, or find the phone number of Jay in Contacts. As shown in (b) in FIG. 8B, the tablet computer can display a name and a phone number of a contact in a display area 803c. The tablet computer may receive an operation of the user of tapping the dial control 803b, and in response to the operation, the tablet computer may send synchronous call signaling to the mobile phone (refer to S702 to S708). After receiving the synchronous call signaling, the mobile phone can set the call with Sam to a call hold state and send a call request to a mobile phone of Jay. While waiting for Jay to answer the call, as shown in (a) in FIG. 8C, the mobile phone may display an interface 804 (which is also referred to as a fourth interface). The interface 804 includes an area 804a, a call merging control 804b (which is also referred to as a second control), and the like. The area 804a is used to display a status of a first call (for example, the call between Xiaoyi and Sam is in a "Hold" state) and a status of a second call. Before Jay answers the call, the status of the second call is "Calling"; and After Jay answers the call, the status of the second call may be "Connected" and call duration is displayed. After Jay answers the call, the mobile phone can receive an operation of the user of tapping the call merging control 604b, and in response to the operation, the mobile phone can merge the call of Jay and the call of Sam, and display an interface 805 as shown in (b) in FIG. 8C. The interface 805 may include conference information 805a and related controls. The conference information 805a may include participants and conference duration. For example, the participants include Jay and Sam, and the conference duration is one second. When an incoming call number is not included in an address book, the participant can be replaced by a phone number.

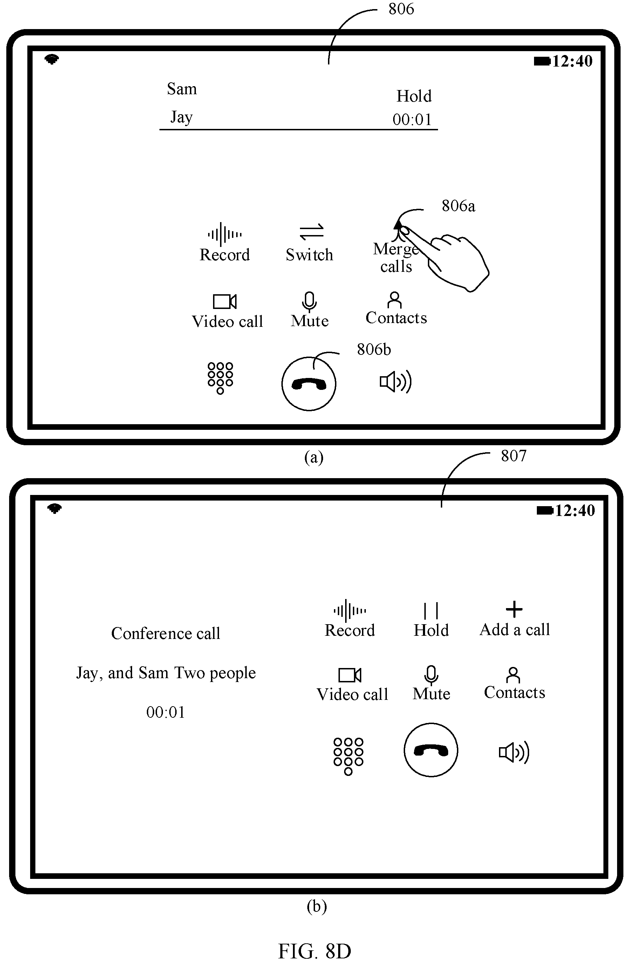

After the mobile phone sets the call of Sam to the call hold state and sends the call request to the mobile phone of Jay, the mobile phone can also send first call status information to the tablet computer, the first call status information indicates that a state of the call with Sam is call hold and a state of the call with Jay is calling. Based on the first call status information, as shown in (a) of FIG. 8D, the tablet computer may display an interface 806 (which is also referred to as a fifth interface). The interface 806 may include a call merging control 806a (which is also referred to as a third control). After Jay answers the call, the mobile phone can send a notification to the tablet computer indicating that the call with Jay is connected. In this case, the tablet computer may receive an operation of the user of tapping the call merging control 806a, and in response to the operation, the tablet computer sends a call merging instruction to the mobile phone. After receiving the call merging instruction, the mobile phone merges the call of Jay and the call of Sam, and sends a notification to the tablet computer, to indicate that the call of Jay and the call of Sam have been merged. After receiving the notification, the tablet computer may display an interface 807 as shown in (b) of FIG. 8D. The interface 807 indicates that Xiaoyi is making a conference call with Jay and Sam.

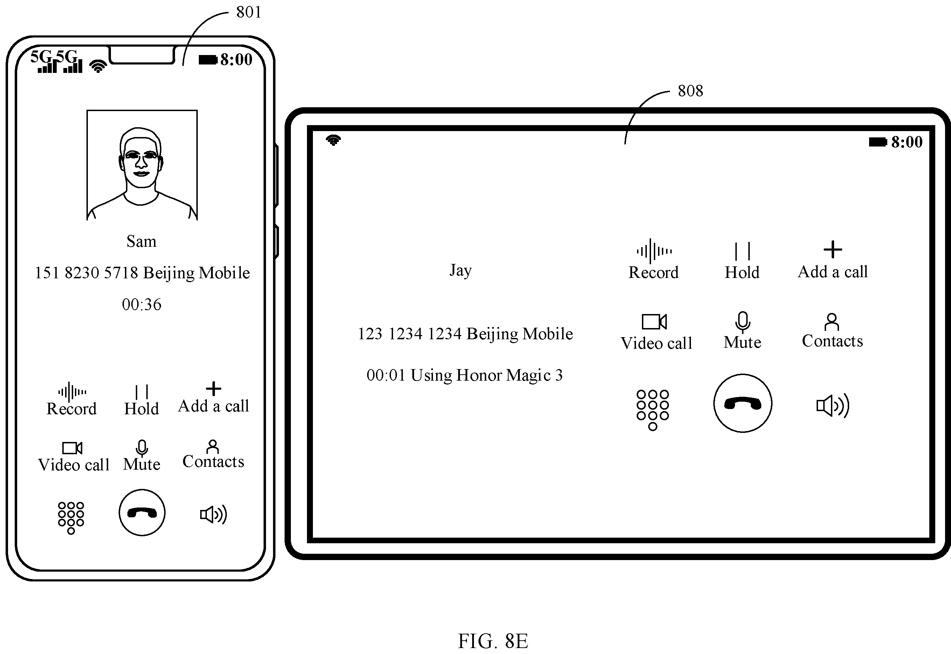

When the mobile phone supports a plurality of (more than two) SIM cards, and supports the plurality of SIM cards to make calls at the same time (which also can be referred to as supporting dual active), and the user uses a SIM card that is not making a call to dial, in the scenario shown in (b) of FIG. 8B, the tablet computer may receive the operation of the user tapping the dial control 803b, and in response to the operation, the tablet computer may send the synchronous call signaling to the mobile phone (refer to S702 to S708), and the mobile phone may dial the target number and feed back a call status (for example, the call status is "Connected") to the tablet computer. The tablet computer may update the interface 803 based on the call status, display an interface 808 as shown in FIG. 8E. The interface 808 may include contact information (for example, Jay), call duration (for example, one second), and related controls. Meanwhile, the mobile phone continues to display the interface 801. In this way, the user can continue to make a call with Jay by using the mobile phone and make a call with Sam by using the tablet computer. This can reduce influence of an operation of the user on the first call, and enable the user to answer two calls at the same time.

It can be learned that, when the user needs to dial another user when making a call, the user can perform a dialing operation by using a device other than the currently used device (namely, the device currently answering the call). This reduces influence of an operation of the user on the call and improves user experience.

In Scenario 3, when the mobile phone supports only one SIM card, and the mobile phone receives two incoming calls, for example, a call 1 and a call 2, the mobile phone can respond to the call 1, for example, displays an incoming call interface, rings, vibrates, and the like, but has no response to the call 2.

When the mobile phone supports a plurality of SIM cards, such as a SIM card 1 and a SIM card 2, where the SIM card 1 receives an incoming call 1 and the SIM card 2 receives an incoming call 2, the mobile phone can determine a target device from a device list and remind the incoming call 1 and the incoming call 2 on the mobile phone and the target device respectively. For the method for determining the target device from the device list by the mobile phone, refer to S511. The method for determining a target device when the device currently in conversation is a mobile phone is not described here.

To sum up, in the call method provided by embodiments of this application, when the device 1 receives the incoming call information or outgoing call information, the device 1 can share the incoming call information or outgoing call information with the device 2 in the communication system, so that a user can answer a call or dial by using the device 2 (for example, a tablet computer) when making a call by using the device 1 (for example, a mobile phone). The multi-party communication is implemented by using a plurality of devices, and reduces influence on a current call.

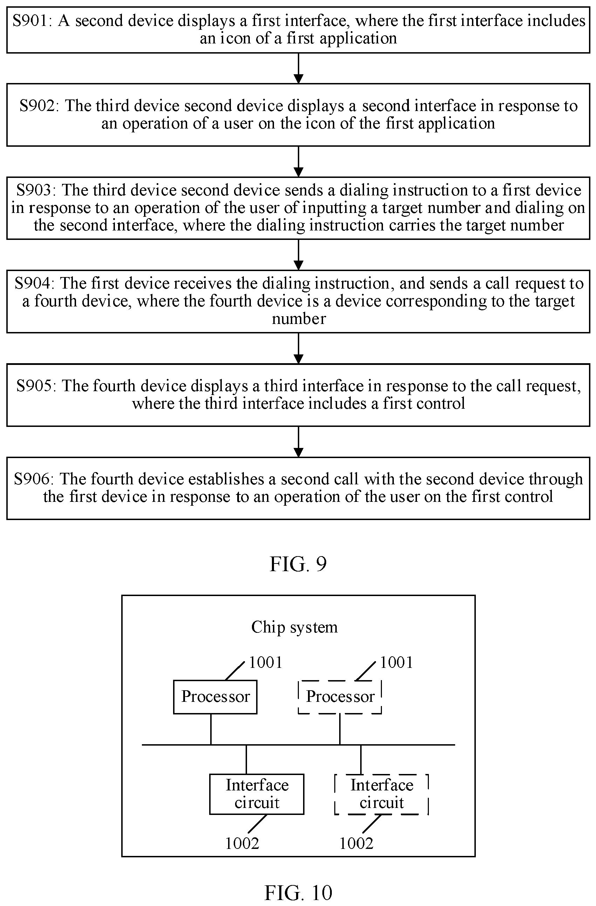

An embodiment of the application further provides a call method that is applied to a communication system including a first device and a second device, where the first device is making a first call with a third device. As shown in FIG. 9, the method includes the following steps.

S901: The second device displays a first interface, where the first interface includes an icon of a first application.

When the communication system includes the first device includes the first device and a plurality of electronic devices, the second device can be an electronic device that has a highest priority among the plurality of electronic devices. For example, the first device may be the mobile phone in FIG. 2A and the second device may be a tablet computer, a PC (notebook), a smart watch, a television, and the like.

For example, as shown in FIG. 8A, the first device is a mobile phone and the second device is a tablet computer, where the mobile phone is making a call to Sam (namely, the first call), and the first interface 802 may be the interface 802 that includes the icon 802a of a phone application (namely, the icon of the first application).

S902: The second device displays a second interface in response to an operation of a user on the icon of the first application.

For example, the second interface may be the interface 803 shown in (a) of FIG. 8B.

S903: The second device sends a dialing instruction to the first device in response to an operation of the user of inputting a target number and dialing on the second interface, where the dialing instruction carries the target number.

For example, as shown in (b) in FIG. 8B, the operation of the user of inputting the target number on the second interface and dialing may be the operation of the user inputting the number "123 1234 1234" and tapping the control 803b, and the dialing instruction may be the synchronous call signaling in S702.

S904: The first device receives the dialing instruction, and sends a call request to a fourth device, where the fourth device is a device corresponding to the target number.

For example, the fourth device may be a terminal device of Jay in an embodiment of this application, and the target number may be a phone number of Jay.

S905: The fourth device displays a third interface in response to the call request, where the third interface includes a first control.

The third interface is an interface for the user to answer an incoming call on the fourth device, and the first control can be a control for answering the incoming call.

S906: The fourth device establishes a second call with the second device through the first device in response to an operation of the user on the first control.

In a possible implementation, when the first device includes a subscriber identification module SIM card, the method further includes: Before the second call is successfully established, the first device sets the first call to call hold in response to the dialing instruction. The first device displays a fourth interface, where the fourth interface includes a second control. After the second call is established, the first device merges the first call and the second call in response to an operation of the user on the second control, to form a third call.

For example, as shown in (a) in FIG. 8C, the first call may be the call of Sam and the second call may be the call of Jay. The fourth interface may be the interface 804 and the second control may be the call merging control 804b. As shown in (b) of FIG. 8C, the mobile phone can merge the call of Jay and the call of Sam, to form a three-party conference call.

In a possible implementation, when the first device includes one SIM card, the method further includes: Before the second call is successfully established, the first device sets the first call to call hold in response to the dialing instruction. The first device sends first call status information to the second device. The second device displays a fifth interface based on the first call status information, where the fifth interface includes a third control. The second device sends a call merging instruction to the first device in response to an operation of the user on the third control. After the second call is established, the first device merges the first call and the second call in response to the call merging instruction, to form a fourth call, where during the fourth call, call data between the second device and the third device or the fourth device is forwarded through the first device.

For example, the fifth interface may be the interface 806 shown in (a) of FIG. 8D, and the third control may be the call merging control 806a.

In a possible implementation, when the first device includes a first SIM card and a second SIM card, and the first call is a call on the first SIM card, the method further includes: When the second call is a call on the first SIM card, after the second call is established, the first device merges the first call and the second call, to form a third call. Alternatively, when the second call is a call on the second SIM card, after the second call is established, the second device makes the second call with the fourth device through the first device, and the first device makes the first call with the third device.

In a possible implementation, the first device displays a sixth interface in response to receiving an incoming call from the fourth device, where the sixth interface includes a fourth control. The first device forwards the incoming call to the second device. The second device displays a seventh interface in response to receiving the incoming call, where the seventh interface includes a fifth control. When the first device receives an operation of the user on the fourth control, the first device establishes a fifth call between established and the fourth device. When the second device receives an operation of the user on the fifth control, the second device sends a first instruction to the first device. The first device establishes a sixth call between the first device and the fourth device in response to receiving the first instruction, where during the sixth call, call data between the second device and the fourth device is forwarded through the first device.

For example, the sixth interface may be the interface 601 in FIG. 6B, and the fourth control may be the acceptance control 601c; and the seventh interface may be the interface 602 in FIG. 6B, and the fifth control may be 602c.

In a possible implementation, when the first device includes only one SIM card, the method further includes: The first device sets the first call to call hold in response to receiving the operation of the user on the fourth control. The first device displays an eighth interface, where the eighth interface includes a sixth control. The first device merges the fifth call and the first call in response to an operation of the user on the sixth control, to form a seventh call.

For example, the eighth interface may be the interface 603 in (b) in FIG. 6C, and the sixth control may be the call merging control 603b.

In a possible implementation, the sixth interface further includes a control for managing the first call, and the method further includes: The first device displays a ninth interface in response to an operation of the user on the control for managing the first call, where the ninth interface includes a seventh control. The first device hangs up the first call and displays a tenth interface in response to an operation of the user on the seventh control, where the tenth interface includes an eighth control. The first device establishes the fifth call between the first device and the fourth device in response to an operation of the user on the eighth control.

For example, the control for managing the first call may be the control 601b in FIG. 6D, the ninth interface may be the interface 605, the seventh control may be the rejection control 605b, the tenth interface may be the interface 606, and the eighth control may be the acceptance control 601c in FIG. 6D.

In a possible implementation, when the first device includes only one SIM card, the method further includes: The first device sets the first call to call hold and sends second call status information to the second device in response to receiving the first instruction. The second device displays an eleventh interface in response to receiving the second call status information, where the eleventh interface includes a ninth control. The second device sends a call merging instruction to the first device in response to an operation of the user on the ninth control. The first device merges the sixth call and the first call in response to receiving the call merging instruction, to form an eighth call, where during the eighth call, call data between the second device and the third device or the fourth device is forwarded through the first device.

For example, the eleventh interface may be the interface 607 in FIG. 6E and the ninth control may be the call merging control 607a.

In a possible implementation, the seventh interface further includes the control for managing the first call, and the method further includes: The second device displays a twelfth interface in response to an operation of the user on the control for managing the first call, where the twelfth interface includes a tenth control. The second device sends a hang-up instruction to the first device in response to an operation of the user on the tenth control. The first device hangs up the first call and sends a hang-up notification to the second device in response to receiving the hang-up instruction. The second device displays a thirteenth interface in response to receiving the hang-up notification, where the thirteenth interface includes an eleventh control. The second device sends the first instruction to the first device in response to an operation of the user on the eleventh control.

For example, the control for managing the first call may be the control 602b in FIG. 6F, the twelfth interface may be the interface 608 in FIG. 6F, the tenth control may be the rejection control 608a, the thirteenth interface may be the interface 610, and the eleventh control may be the acceptance control 610a.

An embodiment of this application further provides a chip system. As shown in FIG. 10, the chip system includes at least one processor 1001 and at least one interface circuit 1002. The processor 1001 and the interface circuit 1002 may be interconnected by using a line. For example, the interface circuit 1002 may be configured to receive a signal from another apparatus (for example, a memory of an electronic device). For another example, the interface circuit 1002 may be configured to send a signal to another apparatus (for example, the processor 1001). For example, the interface circuit 1002 may read instructions stored in the memory, and send the instructions to the processor 1001. When the instructions are executed by the processor 1001, the electronic device is enabled to perform the steps in the foregoing embodiments. Certainly, the chip system may further include another discrete component. This is not specifically limited in this embodiment of this application.

An embodiment of this application further provides a computer storage medium. The computer storage medium includes computer instructions. When the computer instructions are run on the electronic device, the electronic device is enabled to perform the functions or steps performed by the mobile phone in the foregoing method embodiments.

An embodiment of this application further provides a computer program product, the computer program product, when running on a computer, causing the computer to perform the functions or steps performed by the mobile phone in the method embodiments.

It may be understood that, to implement the foregoing functions, the electronic device provided in embodiments of this application includes a corresponding hardware structure and/or software modules for implementing each function. It should be readily appreciated by a person skilled in the art that the example units, algorithms, and steps described with reference to the embodiments disclosed in this specification can be implemented in embodiments of this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in the form of hardware, or may be implemented in a form of a software functional module. It should be noted that, module division in embodiments of this application is an example, is merely logical function division, and may be other division in actual implementation.

The foregoing descriptions about implementations allow a person skilled in the art to clearly understand that, for convenient and brief description, division of the foregoing function modules is taken as an example for illustration. In actual application, the foregoing functions can be allocated to different function modules and implemented based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

## Claims

1. A call method, applied to a second device, wherein a communication connection is established between the second device and a first device, the first device is making a first call with a third device, and the method comprises:
displaying (S901), by the second device, a first interface, wherein the first interface comprises an icon of a first application;
displaying (S902), by the second device, a second interface in response to an operation of a user on the icon of the first application;
sending (S903), by the second device, a dialing instruction to the first device in response to an operation of the user of inputting a target number and dialing on the second interface, so that the first device sends a call request to a fourth device and establishes a second call between the second device and the fourth device through the first device, wherein the dialing instruction carries the target number, the fourth device is a device corresponding to the target number; and
answering, by the second device, the second call between the second device and the fourth device through the first device;
wherein the method further comprises:
determining, by the second device, whether the first device and the second device are logged in to a same system authentication account, wherein if the first device and second device are logged in to the same system authentication account, then a trust relationship exists between the first device and the second device, and both the first device and the second device belong to a same communication system; and
the answering step comprises directly performing data interaction with the first device, without an additional authentication, after determining that the trust relationship exists.

2. The method according to claim 1, wherein when the first device comprises a subscriber identification module, SIM card, the method further comprises:
sending, by the second device, the dialing instruction to the first device, so that the first device sets the first call to call hold before the second call is successfully established.

3. The method according to claim 1, wherein the method further comprises:
receiving, by the second device, first call status information from the first device;
displaying, by the second device, a fifth interface based on the first call status information, wherein the fifth interface comprises a third control; and
sending, by the second device, a call merging instruction to the first device in response to an operation of the user on the third control, so that after the second call is established, the first device merges the first call and the second call to form a fourth call, wherein during the fourth call, call data between the second device and the third device or the fourth device is forwarded through the first device.

4. The method according to claim 1, wherein when the first device comprises a first SIM card and a second SIM card, and the first call is a call on the first SIM card, the method further comprises:
when the second call is a call on the first SIM card, after the second call is established, the first call and the second call is merged by the first device to form a third call; or
when the second call is a call on the second SIM card, after the second call is established, making, by the second device, the second call with the fourth device through the first device.

5. The method according to any one of claims 1 to 4, wherein the method further comprises:
receiving, by the second device, the incoming call, wherein the incoming call is an incoming call from the fourth device to the first device;
displaying, by the second device, a seventh interface in response to receiving the incoming call, wherein the seventh interface comprises a fifth control;
when the second device receives an operation of the user on the fifth control, sending, by the second device, a first instruction to the first device, so that the first device establishes a sixth call between the second device and the fourth device, wherein during the sixth call, call data between the second device and the fourth device is forwarded through the first device.

6. The method according to claim 5, wherein when the first device comprises only one SIM card, the method further comprises:
displaying, by the second device, an eleventh interface in response to receiving the first call status information, wherein the first call status information is sent by the first device after setting the first call to call hold in response to the first instruction, and the eleventh interface comprises a ninth control;
sending, by the second device, a call merging instruction to the first device in response to an operation of the user on the ninth control, so that the first device merges the sixth call and the first call to form an eighth call, wherein during the eighth call, call data between the second device and the third device or the fourth device is forwarded through the first device.

7. The method according to claim 5, wherein the seventh interface further comprises a control for managing the first call, and the method further comprises:
displaying, by the second device, a twelfth interface in response to an operation of the user on the control for managing the first call, wherein the twelfth interface comprises a tenth control;
sending, by the second device, a hang-up instruction to the first device in response to an operation of the user on the tenth control, so that the first device hangs up the first call and sends a hang-up notification to the second device;
displaying, by the second device, a thirteenth interface in response to receiving the hang-up notification, wherein the thirteenth interface comprises an eleventh control; and
sending, by the second device, the first instruction to the first device in response to an operation of the user on the eleventh control.

8. A call method, applied to a first device, wherein a communication connection is established between the first device and a second device configured to perform the method according to any preceding claim, the first device is making a first call with a third device, and the method comprises:
receiving (S904) a dialing instruction, wherein the dialing instruction is sent by the second device in response to an operation of a user of inputting a target number and dialing on a interface of a first application;
sending (S904) a call request to a fourth device in response to the dialing instruction, and establishing a second call between the second device and the fourth device through the first device, wherein the dialing instruction carries the target number, the fourth device is a device corresponding to the target number; and
when the second device answers the second call after determining that a trust relationship exists, directly performing data interaction with the second device, without an additional authentication.

9. The method of claim 8, wherein when the first device comprises a subscriber identification module SIM card, the method further comprises:
before the second call is successfully established, setting the first call to call hold in response to the dialing instruction;
displaying a fourth interface, wherein the fourth interface comprises a second control; and
after the second call is established, merging the first call and the second call in response to an operation of the user on the second control, to form a third call.

10. The method of claim 8, wherein when the first device comprises one SIM card, the method further comprises:
before the second call is successfully established, setting the first call to call hold in response to the dialing instruction;
sending first call status information to the second device, so that the second device sends a call merging instruction to the first device in response to an operation of the user on a third control of a fifth interface based on the first call status information;
and
after the second call is established, merging the first call and the second call in response to the call merging instruction, to form a fourth call, wherein during the fourth call, call data between the second device and the third device or the fourth device is forwarded through the first device.

11. The method of claim 8, wherein when the first device comprises a first SIM card and a second SIM card, and the first call is a call on the first SIM card, the method further comprises:
when the second call is a call on the first SIM card, after the second call is established, merging the first call and the second call, to form a third call; or
when the second call is a call on the second SIM card, after the second call is established, making, by the second device, the second call with the fourth device through the first device, and making, by the first device, the first call with the third device.

12. The method of claim 8, wherein the method further comprises:
displaying a sixth interface in response to receiving an incoming call from the fourth device, wherein the sixth interface comprises a fourth control;
when the first device receives an operation of the user on the fourth control, establishing a fifth call between the first device and the fourth device.

13. The method of claim 12, wherein the method further comprises:
forwarding the incoming call to the second device, so that the second device displays a seventh interface and sends a first instruction to the first device in response to receiving an operation of the user on a fifth control of the seventh interface; and
establishing a sixth call between the first device and the fourth device in response to receiving the first instruction, wherein during the sixth call, call data between the second device and the fourth device is forwarded through the first device.

14. An electronic device (100), comprising: a processor (110) and a memory (121),
wherein the processor is configured to execute a computer program or instructions stored in the memory, so that the electronic device implements the method according to any one of claims 1 to 7, or any one of claims 8 to 13.

15. A computer-readable storage medium, comprising computer instructions; and
when the computer instructions are run on an electronic device, the electronic device is enabled to perform the method according to any one of claims 1 to 7, or any one of claims 8 to 13.

## Patentansprüche

1. Ein Anrufverfahren, angewendet auf ein zweites Gerät, wobei eine Kommunikationsverbindung zwischen dem zweiten Gerät und einem ersten Gerät hergestellt wird, das erste Gerät ein erstes Gespräch mit einem dritten Gerät führt, und das Verfahren umfasst:
Anzeigen (S901) einer ersten Benutzeroberfläche durch das zweite Gerät, wobei die erste Benutzeroberfläche ein Symbol einer ersten Anwendung umfasst;
Anzeigen (S902) einer zweiten Benutzeroberfläche durch das zweite Gerät als Reaktion auf eine Bedienung des Benutzers an dem Symbol der ersten Anwendung;
Senden (S903) einer Wählinstruktion durch das zweite Gerät an das erste Gerät als Reaktion auf eine Bedienung des Benutzers, die eine Zielnummer eingibt und auf der zweiten Benutzeroberfläche wählt, sodass das erste Gerät eine Anrufanfrage an ein viertes Gerät sendet und ein zweites Gespräch zwischen dem zweiten Gerät und dem vierten Gerät über das erste Gerät herstellt, wobei die Wählinstruktion die Zielnummer überträgt, das vierte Gerät ein Gerät ist, das der Zielnummer entspricht; und
Annehmen des zweiten Anrufs zwischen dem zweiten Gerät und dem vierten Gerät über das erste Gerät durch das zweite Gerät;
wobei das Verfahren weiterhin umfasst:
Feststellen durch das zweite Gerät, ob das erste und das zweite Gerät bei demselben System-Authentifizierungskonto angemeldet sind, wobei, wenn das erste und das zweite Gerät beim selben System-Authentifizierungskonto angemeldet sind, eine Vertrauensbeziehung zwischen dem ersten und zweiten Gerät besteht und sowohl das erste als auch das zweite Gerät demselben Kommunikationssystem angehören; und
der Antwortschritt das direkte Durchführen der Datenübertragung mit dem ersten Gerät, ohne zusätzliche Authentifizierung, nach Feststellung des Bestehens der Vertrauensbeziehung umfasst.

2. Verfahren nach Anspruch 1, wobei das erste Gerät ein Teilnehmeridentifikationsmodul, SIM-Karte, umfasst und das Verfahren weiterhin Folgendes umfasst:
Senden der Wählinstruktion durch das zweite Gerät an das erste Gerät, sodass das erste Gerät das erste Gespräch auf Halten setzt, bevor der zweite Anruf erfolgreich hergestellt ist.

3. Verfahren nach Anspruch 1, wobei das Verfahren weiterhin Folgendes umfasst:
Empfangen von Statusinformationen des ersten Anrufs durch das zweite Gerät vom ersten Gerät;
Anzeigen einer fünften Benutzeroberfläche durch das zweite Gerät basierend auf den Statusinformationen des ersten Anrufs, wobei die fünfte Benutzeroberfläche ein drittes Bedienelement umfasst; und
Senden einer Anrufzusammenführungsanweisung durch die zweite Vorrichtung an die erste Vorrichtung als Reaktion auf eine Bedienung des Benutzers am dritten Steuerelement, sodass nach Herstellung des zweiten Anrufs die erste Vorrichtung den ersten und den zweiten Anruf zusammenführt, um einen vierten Anruf zu bilden, wobei während des vierten Anrufs Anrufdaten zwischen der zweiten Vorrichtung und der dritten oder der vierten Vorrichtung über die erste Vorrichtung weitergeleitet werden.

4. Verfahren nach Anspruch 1, wobei, wenn die erste Vorrichtung eine erste SIM-Karte und eine zweite SIM-Karte umfasst und der erste Anruf ein Anruf über die erste SIM-Karte ist, das Verfahren ferner Folgendes umfasst:
wenn der zweite Anruf ein Anruf über die erste SIM-Karte ist, werden nach Herstellung des zweiten Anrufs der erste Anruf und der zweite Anruf von der ersten Vorrichtung zusammengeführt, um einen dritten Anruf zu bilden; oder
wenn der zweite Anruf ein Anruf über die zweite SIM-Karte ist, wird nach Herstellung des zweiten Anrufs der zweite Anruf durch die zweite Vorrichtung mit der vierten Vorrichtung über die erste Vorrichtung geführt.

5. Verfahren nach einem der Ansprüche 1 bis 4, wobei das Verfahren ferner Folgendes umfasst:
Empfangen des eingehenden Anrufs durch die zweite Vorrichtung, wobei der eingehende Anruf ein eingehender Anruf von der vierten Vorrichtung zur ersten Vorrichtung ist;
Anzeigen einer siebten Benutzeroberfläche durch die zweite Vorrichtung als Reaktion auf den Empfang des eingehenden Anrufs, wobei die siebte Benutzeroberfläche ein fünftes Steuerelement umfasst;
Wenn die zweite Vorrichtung eine Bedienung des Benutzers am fünften Steuerelement empfängt, wird durch die zweite Vorrichtung eine erste Anweisung an die erste Vorrichtung gesendet, sodass die erste Vorrichtung einen sechsten Anruf zwischen der zweiten Vorrichtung und der vierten Vorrichtung herstellt, wobei während des sechsten Anrufs Anrufdaten zwischen der zweiten und der vierten Vorrichtung über die erste Vorrichtung weitergeleitet werden.

6. Verfahren nach Anspruch 5, wobei, wenn die erste Vorrichtung nur eine SIM-Karte umfasst, das Verfahren ferner Folgendes umfasst:
Anzeigen einer elften Benutzeroberfläche durch die zweite Vorrichtung als Reaktion auf den Empfang von Statusinformationen des ersten Anrufs, wobei die Statusinformationen des ersten Anrufs von der ersten Vorrichtung gesendet werden, nachdem sie den ersten Anruf gemäß der ersten Anweisung in Halten versetzt hat, und die elfte Benutzeroberfläche ein neuntes Steuerelement enthält;
Senden einer Anrufzusammenführungsanweisung durch die zweite Vorrichtung an die erste Vorrichtung als Reaktion auf eine Bedienung des Benutzers am neunten Steuerelement, sodass die erste Vorrichtung den sechsten Anruf und den ersten Anruf zusammenführt, um einen achten Anruf zu bilden, wobei während des achten Anrufs Anrufdaten zwischen der zweiten Vorrichtung und der dritten oder der vierten Vorrichtung über die erste Vorrichtung weitergeleitet werden.

7. Das Verfahren nach Anspruch 5, wobei die siebte Schnittstelle ferner eine Steuerung zur Verwaltung des ersten Anrufs umfasst, und das Verfahren ferner Folgendes umfasst:
Anzeigen einer zwölften Benutzeroberfläche durch das zweite Gerät als Reaktion auf eine Bedienung des Benutzers an der Steuerung zur Verwaltung des ersten Anrufs, wobei die zwölfte Benutzeroberfläche eine zehnte Steuerung umfasst;
Senden einer Auflegeanweisung durch das zweite Gerät an das erste Gerät als Reaktion auf eine Bedienung des Benutzers an der zehnten Steuerung, sodass das erste Gerät den ersten Anruf auflegt und eine Auflegen-Benachrichtigung an das zweite Gerät sendet;
Anzeigen einer dreizehnten Benutzeroberfläche durch das zweite Gerät als Reaktion auf das Empfangen der Auflegen-Benachrichtigung, wobei die dreizehnte Benutzeroberfläche eine elfte Steuerung umfasst; und
Senden der ersten Anweisung durch das zweite Gerät an das erste Gerät als Reaktion auf eine Bedienung des Benutzers an der elften Steuerung.

8. Ein Anrufverfahren, angewendet auf ein erstes Gerät, wobei eine Kommunikationsverbindung zwischen dem ersten Gerät und einem zweiten Gerät hergestellt wird, das konfiguriert ist, das Verfahren gemäß einem der vorhergehenden Ansprüche durchzuführen, wobei das erste Gerät einen ersten Anruf mit einem dritten Gerät führt, und das Verfahren umfasst Folgendes:
Empfangen (S904) einer Wählinstruktion, wobei die Wählinstruktion vom zweiten Gerät als Reaktion auf eine Bedienung eines Benutzers beim Eingeben einer Zielnummer und Wählen auf einer Oberfläche einer ersten Anwendung gesendet wird;
Senden (S904) einer Anrufanforderung an ein viertes Gerät als Reaktion auf die Wählinstruktion und Aufbau eines zweiten Anrufs zwischen dem zweiten Gerät und dem vierten Gerät über das erste Gerät, wobei die Wählinstruktion die Zielnummer enthält, das vierte Gerät ein Gerät ist, das der Zielnummer entspricht; und
Wenn das zweite Gerät den zweiten Anruf annimmt, nachdem festgestellt wurde, dass eine Vertrauensbeziehung besteht, findet der Datenaustausch direkt mit dem zweiten Gerät statt, ohne eine zusätzliche Authentifizierung.

9. Das Verfahren nach Anspruch 8, wobei, wenn das erste Gerät ein Teilnehmeridentifikationsmodul (SIM-Karte) umfasst, das Verfahren ferner Folgendes umfasst:
Vor dem erfolgreichen Aufbau des zweiten Anrufs wird als Reaktion auf die Wählinstruktion der erste Anruf in die Anklopffunktion (Rufhalten) gesetzt;
Anzeigen einer vierten Benutzeroberfläche, wobei die vierte Benutzeroberfläche eine zweite Steuerung umfasst; und
Nach dem Aufbau des zweiten Anrufs werden der erste und der zweite Anruf als Reaktion auf eine Bedienung des Benutzers an der zweiten Steuerung zusammengeführt, um einen dritten Anruf zu bilden.

10. Das Verfahren nach Anspruch 8, wobei, wenn das erste Gerät eine SIM-Karte umfasst, das Verfahren ferner Folgendes umfasst:
Bevor der zweite Anruf erfolgreich aufgebaut ist, wird der erste Anruf gemäß der Wählanweisung in den Haltezustand versetzt;
Übermittlung von Statusinformationen des ersten Anrufs an das zweite Gerät, sodass das zweite Gerät eine Anrufzusammenführungsanweisung an das erste Gerät sendet, wenn der Benutzer basierend auf den Statusinformationen des ersten Anrufs eine Aktion auf einer dritten Steuerung einer fünften Oberfläche ausführt;
und
Nachdem der zweite Anruf aufgebaut wurde, werden der erste und der zweite Anruf als Reaktion auf die Anrufzusammenführungsanweisung zusammengeführt, sodass ein vierter Anruf entsteht, wobei während des vierten Anrufs Anrufdaten zwischen dem zweiten Gerät und dem dritten oder vierten Gerät über das erste Gerät weitergeleitet werden.

11. Verfahren nach Anspruch 8, wobei, wenn das erste Gerät eine erste SIM-Karte und eine zweite SIM-Karte umfasst und der erste Anruf ein Anruf auf der ersten SIM-Karte ist, das Verfahren weiterhin Folgendes umfasst:
Wenn der zweite Anruf ein Anruf auf der ersten SIM-Karte ist, werden nach Aufbau des zweiten Anrufs der erste und der zweite Anruf zusammengeführt, sodass ein dritter Anruf entsteht; oder
Wenn der zweite Anruf ein Anruf auf der zweiten SIM-Karte ist, wird nach Aufbau des zweiten Anrufs vom zweiten Gerät aus der zweite Anruf mit dem vierten Gerät über das erste Gerät geführt und vom ersten Gerät aus der erste Anruf mit dem dritten Gerät.

12. Verfahren nach Anspruch 8, wobei das Verfahren weiterhin Folgendes umfasst:
Anzeige einer sechsten Schnittstelle als Reaktion auf den Eingang eines Anrufs vom vierten Gerät, wobei die sechste Schnittstelle eine vierte Steuerung umfasst;
Wenn das erste Gerät eine Benutzeraktion auf der vierten Steuerung empfängt, wird ein fünfter Anruf zwischen dem ersten Gerät und dem vierten Gerät aufgebaut.

13. Verfahren nach Anspruch 12, wobei das Verfahren weiterhin Folgendes umfasst:
Weiterleitung des eingehenden Anrufs an das zweite Gerät, sodass das zweite Gerät eine siebte Schnittstelle anzeigt und eine erste Anweisung an das erste Gerät sendet, wenn der Benutzer auf ein fünftes Bedienelement der siebten Schnittstelle reagiert; und
Aufbau eines sechsten Anrufs zwischen dem ersten Gerät und dem vierten Gerät als Reaktion auf den Empfang der ersten Anweisung, wobei während des sechsten Anrufs Anrufdaten zwischen dem zweiten Gerät und dem vierten Gerät über das erste Gerät weitergeleitet werden.

14. Elektronisches Gerät (100), umfassend: einen Prozessor (110) und einen Speicher (121),
wobei der Prozessor dazu konfiguriert ist, ein im Speicher gespeichertes Computerprogramm oder Anweisungen auszuführen, sodass das elektronische Gerät das Verfahren nach einem der Ansprüche 1 bis 7 oder einem der Ansprüche 8 bis 13 umsetzt.

15. Ein computerlesbares Speichermedium, umfassend Computeranweisungen; und
wenn die Computeranweisungen auf einem elektronischen Gerät ausgeführt werden, ist das elektronische Gerät in der Lage, das Verfahren gemäß einem der Ansprüche 1 bis 7 oder einem der Ansprüche 8 bis 13 auszuführen.

## Revendications

1. Procédé d'appel appliqué à un second dispositif, dans lequel une connexion de communication est établie entre le second dispositif et un premier dispositif, le premier dispositif étant en communication avec un troisième dispositif, le procédé comprenant :
affichage (S901), par le second dispositif, d'une première interface, ladite première interface comprenant une icône d'une première application ;
affichage (S902), par le second dispositif, d'une deuxième interface en réponse à une opération de l'utilisateur sur l'icône de la première application ;
envoi (S903), par le second dispositif, d'une instruction de composition au premier dispositif en réponse à une opération de l'utilisateur saisissant un numéro cible et composant sur la deuxième interface, de sorte que le premier dispositif envoie une demande d'appel à un quatrième dispositif et établit un second appel entre le second dispositif et le quatrième dispositif via le premier dispositif, l'instruction de composition portant le numéro cible, le quatrième dispositif étant un dispositif correspondant au numéro cible ; et
réponse, par le second dispositif, au second appel entre le second dispositif et le quatrième dispositif via le premier dispositif ;
le procédé comprenant en outre :
détermination, par le second dispositif, si le premier dispositif et le second dispositif sont connectés avec le même compte d'authentification de système, auquel cas, si le premier dispositif et le second dispositif sont connectés avec le même compte d'authentification de système, une relation de confiance existe entre le premier dispositif et le second dispositif, et les deux font partie du même système de communication ; et
l'étape de réponse comprend l'exécution directe d'une interaction de données avec le premier dispositif, sans authentification supplémentaire, après avoir déterminé que la relation de confiance existe.

2. Procédé selon la revendication 1, dans lequel, lorsque le premier dispositif comprend un module d'identification d'abonné, carte SIM, le procédé comprend en outre :
envoi, par le second dispositif, de l'instruction de composition au premier dispositif, de sorte que le premier dispositif place le premier appel en garde (hold) avant que le second appel ne soit établi avec succès.

3. Procédé selon la revendication 1, dans lequel le procédé comprend en outre :
réception, par le second dispositif, d'informations d'état du premier appel provenant du premier dispositif ;
affichage, par le second dispositif, d'une cinquième interface basée sur les informations d'état du premier appel, ladite cinquième interface comprenant un troisième contrôle ; et
en envoyant, par le deuxième dispositif, une instruction de fusion d'appel au premier dispositif en réponse à une opération de l'utilisateur sur le troisième contrôle, de sorte qu'après l'établissement du deuxième appel, le premier dispositif fusionne le premier appel et le deuxième appel pour former un quatrième appel, où, pendant le quatrième appel, les données d'appel entre le deuxième dispositif et le troisième dispositif ou le quatrième dispositif sont transmises via le premier dispositif.

4. Procédé selon la revendication 1, dans lequel, lorsque le premier dispositif comprend une première carte SIM et une deuxième carte SIM, et que le premier appel est un appel sur la première carte SIM, le procédé comprend en outre :
lorsque le deuxième appel est un appel sur la première carte SIM, après l'établissement du deuxième appel, le premier appel et le deuxième appel sont fusionnés par le premier dispositif pour former un troisième appel ; ou
lorsque le deuxième appel est un appel sur la deuxième carte SIM, après l'établissement du deuxième appel, le deuxième dispositif effectue le deuxième appel avec le quatrième dispositif via le premier dispositif.

5. Procédé selon l'une quelconque des revendications 1 à 4, dans lequel le procédé comprend en outre :
recevoir, par le deuxième dispositif, l'appel entrant, ledit appel entrant étant un appel en provenance du quatrième dispositif vers le premier dispositif ;
afficher, par le deuxième dispositif, une septième interface en réponse à la réception de l'appel entrant, ladite septième interface comprenant un cinquième contrôle ;
lorsque le deuxième dispositif reçoit une opération de l'utilisateur sur le cinquième contrôle, envoyer, par le deuxième dispositif, une première instruction au premier dispositif, de sorte que le premier dispositif établisse un sixième appel entre le deuxième dispositif et le quatrième dispositif, où, pendant le sixième appel, les données d'appel entre le deuxième dispositif et le quatrième dispositif sont transmises via le premier dispositif.

6. Procédé selon la revendication 5, dans lequel, lorsque le premier dispositif ne comprend qu'une seule carte SIM, le procédé comprend en outre :
afficher, par le deuxième dispositif, une onzième interface en réponse à la réception de l'information d'état du premier appel, ladite information d'état du premier appel étant envoyée par le premier dispositif après avoir mis le premier appel en attente à la suite de la première instruction, et ladite onzième interface comprenant un neuvième contrôle ;
envoyer, par le deuxième dispositif, une instruction de fusion d'appel au premier dispositif en réponse à une opération de l'utilisateur sur le neuvième contrôle, de sorte que le premier dispositif fusionne le sixième appel et le premier appel pour former un huitième appel, où, pendant le huitième appel, les données d'appel entre le deuxième dispositif et le troisième dispositif ou le quatrième dispositif sont transmises via le premier dispositif.

7. Le procédé selon la revendication 5, dans lequel la septième interface comprend en outre un contrôle pour la gestion du premier appel, et le procédé comprend en outre :
afficher, par le deuxième dispositif, une douzième interface en réponse à une opération de l'utilisateur sur le contrôle de gestion du premier appel, la douzième interface comprenant un dixième contrôle ;
envoyer, par le deuxième dispositif, une instruction de raccrochage au premier dispositif en réponse à une opération de l'utilisateur sur le dixième contrôle, de sorte que le premier dispositif raccroche le premier appel et envoie une notification de raccrochage au deuxième dispositif ;
afficher, par le deuxième dispositif, une treizième interface en réponse à la réception de la notification de raccrochage, la treizième interface comprenant un onzième contrôle ; et
envoyer, par le deuxième dispositif, la première instruction au premier dispositif en réponse à une opération de l'utilisateur sur le onzième contrôle.

8. Un procédé d'appel, appliqué à un premier dispositif, dans lequel une connexion de communication est établie entre le premier dispositif et un deuxième dispositif configuré pour exécuter le procédé selon l'une quelconque des revendications précédentes, le premier dispositif étant en cours d'appel avec un troisième dispositif, et le procédé comprend :
recevoir (S904) une instruction de numérotation, ladite instruction étant envoyée par le deuxième dispositif en réponse à une opération d'un utilisateur saisissant un numéro cible et composant sur une interface d'une première application ;
envoyer (S904) une demande d'appel à un quatrième dispositif en réponse à l'instruction de numérotation, et établir un deuxième appel entre le deuxième dispositif et le quatrième dispositif via le premier dispositif, l'instruction de numérotation comportant le numéro cible, le quatrième dispositif correspondant au numéro cible ; et
lorsque le deuxième dispositif répond au deuxième appel après avoir déterminé qu'une relation de confiance existe, effectuer directement une interaction de données avec le deuxième dispositif sans authentification supplémentaire.

9. Le procédé selon la revendication 8, dans lequel lorsque le premier dispositif comprend un module d'identification d'abonné (carte SIM), le procédé comprend en outre :
avant que le deuxième appel ne soit établi avec succès, mettre le premier appel en attente en réponse à l'instruction de numérotation ;
afficher une quatrième interface, la quatrième interface comprenant un deuxième contrôle ; et
après l'établissement du deuxième appel, fusionner le premier appel et le deuxième appel en réponse à une opération de l'utilisateur sur le deuxième contrôle, afin de former un troisième appel.

10. Le procédé selon la revendication 8, dans lequel lorsque le premier dispositif comprend une seule carte SIM, le procédé comprend en outre :
avant que le deuxième appel ne soit établi avec succès, mettre le premier appel en attente d'appel en réponse à l'instruction de numérotation ;
envoyer des informations sur l'état du premier appel au deuxième appareil, de sorte que le deuxième appareil envoie une instruction de fusion d'appel au premier appareil en réponse à une opération de l'utilisateur sur un troisième contrôle d'une cinquième interface basée sur les informations d'état du premier appel ;
et
après l'établissement du deuxième appel, fusionner le premier appel et le deuxième appel en réponse à l'instruction de fusion d'appel pour former un quatrième appel, dans lequel, pendant le quatrième appel, les données d'appel entre le deuxième appareil et le troisième appareil ou le quatrième appareil sont transmises via le premier appareil.

11. Le procédé selon la revendication 8, dans lequel, lorsque le premier appareil comprend une première carte SIM et une deuxième carte SIM, et le premier appel est un appel sur la première carte SIM, le procédé comprend en outre :
lorsque le deuxième appel est un appel sur la première carte SIM, après l'établissement du deuxième appel, fusionner le premier appel et le deuxième appel pour former un troisième appel ; ou
lorsque le deuxième appel est un appel sur la deuxième carte SIM, après l'établissement du deuxième appel, faire, par le deuxième appareil, le deuxième appel avec le quatrième appareil via le premier appareil, et faire, par le premier appareil, le premier appel avec le troisième appareil.

12. Le procédé selon la revendication 8, ledit procédé comprenant en outre :
afficher une sixième interface en réponse à la réception d'un appel entrant du quatrième appareil, ladite sixième interface comprenant un quatrième contrôle ;
lorsque le premier appareil reçoit une opération de l'utilisateur sur le quatrième contrôle, établir un cinquième appel entre le premier appareil et le quatrième appareil.

13. Le procédé selon la revendication 12, ledit procédé comprenant en outre :
rediriger l'appel entrant vers le deuxième appareil, de sorte que le deuxième appareil affiche une septième interface et envoie une première instruction au premier appareil en réponse à une opération de l'utilisateur sur un cinquième contrôle de la septième interface ; et
établir un sixième appel entre le premier appareil et le quatrième appareil en réponse à la réception de la première instruction, dans lequel, pendant le sixième appel, les données d'appel entre le deuxième appareil et le quatrième appareil sont transmises via le premier appareil.

14. Un dispositif électronique (100), comprenant : un processeur (110) et une mémoire (121),
le processeur étant conçu pour exécuter un programme informatique ou des instructions stockées dans la mémoire, de sorte que le dispositif électronique mette en œuvre le procédé selon l'une quelconque des revendications 1 à 7, ou l'une quelconque des revendications 8 à 13.

15. Un support de stockage lisible par ordinateur, comprenant des instructions informatiques ; et
lorsque les instructions informatiques sont exécutées sur un dispositif électronique, ledit dispositif électronique est apte à mettre en œuvre le procédé selon l'une quelconque des revendications 1 à 7, ou l'une quelconque des revendications 8 à 13.
